# EUROPÄISCHE PATENTSCHRIFT

(11) **EP 3 865 827 B1**
(45) Veröffentlichungstag und Bekanntmachung des Hinweises auf die Patenterteilung: **27.04.2022**
(21) Anmeldenummer: 20157361.5
(22) Anmeldetag: 14.02.2020
(51) Int. Cl.: G01D 5/244, G01D 5/347

(54) **VORRICHTUNG ZUR POSITIONS-, LÄNGEN-, ODER WINKELBESTIMMUNG**
POSITION, LENGTH OR ANGLE DETERMINATION DEVICE
DISPOSITIF DE DÉTERMINATION DE LA POSITION, DE LA LONGUEUR OU DE L'ANGLE

(43) Veröffentlichungstag der Anmeldung: 18.08.2021
(73) Patentinhaber: SICK AG, 79183 Waldkirch/Breisgau (DE)
(72) Erfinder: Mutschler, Reinhold, 78056 Villingen-Schwenningen (DE); Girke, Jürgen, 78549 Spaichingen (DE)
(74) Vertreter: Manitz Finsterwald Patent- und Rechtsanwaltspartnerschaft mbB

(56) Entgegenhaltungen:
- EP-A1- 3 270 114
- EP-A2- 1 593 971
- DE-A1- 3 434 608

## Beschreibung

Die Erfindung betrifft eine Vorrichtung zur Positions-, Längen-, oder Winkelbestimmung.

Vorrichtungen zur Positions-, Längen-, oder Winkelbestimmung sind allgemein bekannt und können insbesondere folgende Elemente umfassen: ein erstes und ein zweites Teil, welche relativ zueinander bewegbar sind; eine an dem ersten Teil angebrachte erste Codespur und eine an dem ersten Teil angebrachte zweite Codespur; eine an dem zweiten Teil angebrachte Auslesevorrichtung zur Erfassung der ersten und zweiten Codespur; und eine Auswerteeinheit, welche dazu ausgebildet ist, anhand der von der Auslesevorrichtung erfassten ersten und zweiten Codespur eine Relativposition zwischen dem ersten und dem zweiten Teil zu ermitteln. Die Relativposition kann durch translatorische und/oder rotatorische Bewegung des ersten Teils relativ zu dem zweiten Teil veränderbar sein. Es versteht sich, dass zusätzlich zu der ersten und zweiten Codespur noch weiteren Codespuren vorgesehen sein können. Die Auslesevorrichtung kann auch als Abtastvorrichtung bezeichnet werden.

Vorrichtungen zur Positions-, Längen- oder Winkelbestimmung werden in einer Vielzahl von technischen Bereichen eingesetzt. Beispielsweise können solche Vorrichtungen in Werkzeugmaschinen Verwendung finden, wobei z.B. eine Positions- oder Winkelmessung eines Werkzeugs relativ zu dem Werkstück ermöglicht wird. Weitere Einsatzbereiche sind Drehwinkelsensoren.

Bei der Ermittlung der Relativposition können Fehlfunktionen auftreten. Beispielsweise kann die ermittelte Relativposition von der tatsächlichen Relativposition abweichen. Derartige Fehlfunktionen können z.B. durch mechanische Montagefehler und Montagetoleranzen oder durch Beschädigungen der Codespuren verursacht werden. Hierbei ist zu berücksichtigen, dass das erste und/oder zweite Teil durch ein Lager geführt wird, sodass es im Laufe des Betriebs zu Verschleißerscheinungen kommen kann, die wiederum etwaige Fehlfunktionen nach sich ziehen können. Ferner können sich bei optischen Auslesevorrichtungen Lichtreflexionen negativ auf die Erfassung der Codespuren auswirken. Darüber hinaus existieren weitere Einflüsse, deren Auswirkungen auf die Funktion der Vorrichtung nur mit begrenzter Genauigkeit oder gar nicht abgeschätzt werden können. Hierzu gehören z.B. variable Umgebungstemperaturen, Verschmutzungen sowie Signalabweichungen, die in Abhängigkeit von der Bewegungsgeschwindigkeit des ersten Teils relativ zu dem zweiten Teil unterschiedlich sein können. Darüber hinaus sind Überlagerungseffekte zu erwarten, die aufgrund verschiedener paralleler Einflüsse entstehen und deren Ausmaß nicht sicher vorhergesagt werden kann. Es existiert somit eine Vielzahl von potentiell fehlerbegründenden Einflüssen auf die Funktion der Vorrichtung.

Zur Vermeidung von Fehlfunktionen wird die Ermittlung der Relativposition bislang aufwändig überprüft. Beispielsweise werden Signale, die für die Ermittlung der Relativposition herangezogen werden, mittels eines externen Prüfgeräts erfasst und mit vordefinierten Referenzsignalen verglichen. Da bei jeder Relativposition in großer Anzahl unterschiedliche Signale erzeugt werden, steigt die zu erfassende und überprüfende Datenmenge mit der Anzahl der zu unterscheidenden Relativpositionen stark an. Somit ist die Funktionsüberprüfung insbesondere im laufenden Betrieb der Vorrichtung nur schwer zu bewerkstelligen. Aus diesem Grund wird die Funktionsüberprüfung häufig nur einmal nach der Montage einer jeweiligen Vorrichtung durchgeführt, wobei die fehlerfreie Funktion der Vorrichtung im betrieblichen Einsatz durch das Einhalten von Montage- und Funktionstoleranzen gewährleistet werden soll. Es hat sich jedoch gezeigt, dass das Einhalten von Toleranzen im Hinblick auf die zahlreichen Einflüsse im Betrieb der Vorrichtung nicht ausreichend sind, um die Fehlerfreiheit über die Lebensdauer der Vorrichtung mit ausreichender Sicherheit zu gewährleisten. Nachteilig bei der bisher praktizierten Funktionsüberprüfung ist auch, dass zusätzliche Schnittstellen zur Verfügung gestellt werden müssen, um die Überprüfung der Vorrichtung überhaupt zu ermöglichen. Eine hohe Zuverlässigkeit und Präzision der Vorrichtung ist allerdings unabdingbar, sodass auf eine Funktionsüberprüfung trotz Einhaltung hoher Produktionsstandards nicht verzichtet werden kann. Es ist zu erwarten, dass die hiermit verbundenen Schwierigkeiten angesichts der Forderung nach immer höher auflösenden Systemen zunehmen werden.

EP 1 593 971 A2 offenbart eine Prüfvorrichtung für einen Drehimpulsgeber mit mehreren Spuren. Die Funktionstüchtigkeit des Drehimpulsgebers wird anhand einer Phasenlage zwischen Impulsen der Spuren überprüft.

Aus DE 34 34 608 A1 ist eine Wegmesseinrichtung mit einem inkrementalen Weggeber bekannt. Signalflanken werden erkannt und gezählt. Anhand der Anzahl der Signalflanken kann die ordnungsgemäße Funktion überwacht werden. Es besteht Bedarf an einer Vorrichtung der eingangs genannten Art, die eine zuverlässige und einfache Funktionsüberprüfung der Vorrichtung ermöglicht. Ferner besteht Bedarf an einem Verfahren, das eine zuverlässige und einfache Funktionsüberprüfung der Vorrichtung ermöglicht.

Die Aufgabe wird gelöst durch den Gegenstand gemäß Anspruch 1 und ein Verfahren gemäß Anspruch 10.

Ein Aspekt der Lösung besteht darin, dass die Auswerteeinheit der Vorrichtung dazu ausgebildet ist, zur Funktionsüberprüfung der Vorrichtung wenigstens einen Prüfwert auf der Grundlage der erfassten ersten Codespur und der erfassten zweiten Codespur zu ermitteln. Die Funktionsüberprüfung kann sodann unmittelbar auf der Basis von ein oder mehreren Prüfwerten durchgeführt werden, ohne dass hierfür umfangreiche Datenmengen erzeugt und mit ebenso umfangreichen Referenzdaten verglichen werden müssen. Die Funktionsüberprüfung kann somit im Sinne einer kompakten Selbstdiagnose besonders einfach und dennoch zuverlässig ausgestaltet werden. Hierbei ist es von Vorteil, dass der Prüfwert auf der Grundlage der beiden Codespuren ermittelt wird, weil die Codespuren im laufenden Betrieb der Vorrichtung ohnehin erfasst werden. Hierdurch wird die Möglichkeit einer schnellen Überprüfung geschaffen, die insbesondere im laufenden Betrieb der Vorrichtung z.B. in Echtzeit durchgeführt werden kann. Ferner kann die Auswirkung praktisch beliebiger Einflüsse auf die Funktion der Vorrichtung zuverlässig erkannt werden. Auf ein umfangreiches Diagnoseprogramm, welches sämtliche Betriebssituationen abdecken muss, kann daher verzichtet werden.

Der wenigstens eine Prüfwert kann allgemein auf einer vordefinierten Relation zwischen der erfassten ersten und zweiten Codespur beruhen. Beispielsweise kann ein zweites Signal, welches die erfasste zweite Codespur repräsentiert, in Abhängigkeit von einem ersten Signal ausgewertet werden, welches die erfasste erste Codespur repräsentiert. Eine Auswertung kann insbesondere selektiv erfolgen, d.h. es können in Abhängigkeit des ersten Signals lediglich ausgewählte Signalbereiche oder-punkte zur Ermittlung von Prüfwerten herangezogen werden. Die Signalbereiche können sich auf ein zeitliches oder örtliches Intervall beziehen. Der Aufwand zur Ermittlung des wenigstens einen Prüfwerts kann hierdurch reduziert werden. Ferner ist es möglich, lediglich eine Untermenge der ausgewählten Signalbereiche oder Signalpunkte für die Funktionsüberprüfung heranzuziehen, um die zu verarbeitenden Datenmenge zu reduzieren. Beispielsweise können, insbesondere ausschließlich, Extremwerte, d.h. Minimal- und/oder Maximalwerte für eine Funktionsüberprüfung herangezogen werden. Alternativ kann zu demselben Zweck aus den mehreren Prüfwerten eine Untermenge ausgewählt werden, um die Funktionsüberprüfung durchzuführen.

Vorzugsweise besitzen die erste Codespur, die zweite Codespur sowie die Auslesevorrichtung bzw. der zweite Teil jeweils eine vordefinierte räumliche Lage, sodass die erfassten Codespuren in Abhängigkeit von der Relativposition zwischen dem ersten und zweiten Teil stets gleich sein sollten. Zum Beispiel sollten Signale, die anhand der Auslesevorrichtung zur Erfassung der Codespuren erzeugt werden, in Abhängigkeit von der Relativposition vorzugsweise stets gleich oder zumindest sehr ähnlich (z.B. deutlich weniger als eine halbe Messeinheit) sein, sodass die Relativposition auf dieser Grundlage tatsächlich korrekt ermittelt werden kann. Eine atypische Abweichung zwischen den erfassten Codespuren kann allerdings zu einer fehlerhaften Ermittlung der Relativposition führen. Zur Detektion dieser und weiterer Fehlfunktionen wird der Prüfwert ermittelt, der eine Relation zwischen den erfassten Codespuren repräsentiert. Beispielsweise repräsentiert der Prüfwert die erfasste zweite Codespur in Abhängigkeit von der erfassten ersten Codespur, wie nachfolgend noch genauer erläutert wird.

Die Codespuren und die Auslesevorrichtung werden bevorzugt mit dem jeweiligen Teil der Vorrichtung mitbewegt. Dementsprechend können die Codespuren und/oder die Auslesevorrichtung jeweils starr an dem ersten bzw. zweiten Teil angebracht sein. Durch eine Relativbewegung des ersten und des zweiten Teils zueinander wird bevorzugt ein anderer Abschnitt der Codespuren in den Bereich der Auslesevorrichtung gebracht. Durch die Ermittlung des betreffenden Abschnitts der Codespuren kann dann auf die momentane Relativposition (z.B. Winkelposition) zwischen dem ersten und dem zweiten Teil rückgeschlossen werden.

Eine Codespur ist allgemein eine Anordnung von mehreren Markierungen entlang einer vordefinierten Erstreckungsrichtung, die abschnittsweise gerade oder gekrümmt sein kann. Eine Codespur kann daher auch als Markierungsspur bezeichnet werden. Die Markierungen dienen zur Position-, Längen-, oder Winkelbestimmung und können unterschiedlich ausgebildet sein. Die Codespuren erstrecken sich vorzugsweise entlang einer gemeinsamen Richtung, z.B. entlang paralleler Geraden oder entlang konzentrischer Kreise.

Ausführungsformen sind in den abhängigen Ansprüchen, der Beschreibung und den Zeichnungen beschrieben.

Die erste Codespur umfasst Bereiche erster Art und Bereiche zweiter Art (z.B. helle und dunkle Bereiche), wobei die Bereiche erster und zweiter Art eine Codierung zur Positions-, Längen-, oder Winkelbestimmung schaffen. Die Bereiche erster und zweiter Art weisen jeweils eine Länge auf, die gleich einem Vielfachen einer vordefinierten Maßeinheit ist. Die zweite Codespur ist vorzugsweise periodisch mit einer Periodenlänge ausgebildet, die gleich einem Vielfachen der vordefinierten Maßeinheit ist, wobei die Periodenlänge bevorzugt gleich dem Zweifachen der vordefinierten Maßeinheit ist. Die beiden Codespuren beruhen somit auf derselben Maßeinheit, wobei die zweite Codespur periodisch ist, d.h. ein sich entlang der Codespur wiederholendes Muster besitzt. Dies ermöglicht die Ermittlung von gleichartigen Prüfwerten für verschiedene Relativpositionen, sodass die Funktionsüberprüfung besonders einfach gestaltet werden kann.

Es versteht sich, dass ein Vielfaches als eine Multiplikation mit einer natürlichen Zahl definiert ist, wobei die Zahl Null nicht als eine natürliche Zahl gezählt werden sollte.

Die Codierung der ersten Codespur weist vorzugsweise mehrere Codeworte auf, wobei jedes Codewort eine vorbestimmte Anzahl von Codeabschnitten umfasst, die durch die Bereiche erster und zweiter Art gebildet werden. Die Codierung kann beispielsweise durch eine Photodiodenanordnung der Auslesevorrichtung detektiert und anschließend ausgewertet werden. Grundsätzlich ist es möglich, nur eine Anzahl von Photodioden vorzusehen, die der Anzahl der Bits (d.h. der Codeabschnitte) des zu lesenden Codeworts entspricht. In der Praxis kann es jedoch zu Relativpositionen zwischen der Codierung und den Photodioden bzw. der Auslesevorrichtung kommen, bei welchen lediglich ein Teil eines Codeabschnitts (z.B. hälftig) ausgelesen wird, wodurch es zu undefinierten Schaltzuständen der Photodioden kommen kann. Dann kann eine eindeutige Bestimmung des korrekten Codeworts gegebenenfalls nicht möglich sein. Um eine bessere Erkennung des Codeworts zu ermöglichen, können mehrere Photodioden vorgesehen werden, so dass sich in Messrichtung eine verschachtelte Photodiodenanordnung zweier Kanäle oder Gruppen im Wechsel ergibt. Es kann dann zwischen den beiden Kanälen hin und her geschaltet werden, um jeweils denjenigen Kanal auszulesen, der gerade eine eindeutige Ermittlung des Codeworts gestattet (d.h. bei welchem gerade z.B. keine Codeabschnitte nur hälftig von einer der Photodioden betrachtet werden). Die zweite Codespur wird vorzugsweise dazu verwendet, denjenigen Kanal auszuwählen, der eine eindeutige Ermittlung des Codeworts gestattet. Die zweite Codespur kann dementsprechend als Steuerspur oder Inkrementalspur bezeichnet werden. Vorzugsweise wird ein Steuersignal erzeugt, welches zur Auswahl des gewünschten Kanals verwendet wird. Ferner kann z.B. mithilfe der Auslesevorrichtung ein Prüfsignal erzeugt werden, welches in Abhängigkeit von der Relativposition zwischen dem ersten und zweiten Teil einen Prüfwinkel repräsentiert. Das Prüfsignal bzw. der Prüfwinkel kann zur Ermittlung von Prüfwerten verwendet werden, wie nachfolgend erläutert wird.

Der zweite Teil der Vorrichtung ist vorzugsweise als optischer ASIC (applicationspecific integrated circuit) oder als Modul ausgebildet, in welchem z.B. die Auslesevorrichtung und die Auswerteeinheit zusammen eine Sensoreinheit der Vorrichtung bilden.

Gemäß einer weiteren vorteilhaften Ausführungsform umfasst die Codierung einen Absolutcode. Zudem kann die Auswerteeinheit ausgebildet sein, eine Absolutposition zwischen dem ersten und dem zweiten Teil zu ermitteln. Durch den Absolutcode kann nicht nur eine Relativposition der zwei Teile zueinander, sondern sogar deren Absolutposition (z.B. absolute lineare Verschiebung oder absolute Winkelposition) zueinander feststellbar sein. Der Absolutcode kann insbesondere keine sich wiederholenden Codeworte umfassen.

Nach der Ermittlung der Relativposition bzw. der Absolutposition kann die ermittelte Position von der Auswerteeinheit über eine Datenschnittstelle ausgegeben werden.

Gemäß einer weiteren vorteilhaften Ausführungsform umfasst die Codierung einen Pseudo-Random-Code. Die Codierung kann pseudo-zufällig erzeugt worden sein. Zur Generierung von Pseudo-Random-Code existieren z.B. verschiedene mathematische Vorschriften. Ein Pseudo-Random-Code kann beispielsweise mittels eines linear rückgekoppelten Schieberegisters (engl. *linear feedback shift register,* kurz *LFSR*) erzeugt werden.

Die zweite Codespur umfasst Bereiche erster Art und Bereiche zweiter Art (z.B. helle und dunkle Bereiche), welche jeweils eine Länge aufweisen, die gleich der vordefinierten Maßeinheit ist, und wobei die Bereiche erster und zweiter Art der zweiten Codespur zu den Bereichen erster und zweiter Art der ersten Codespur einen Versatz aufweisen, der vorzugsweise gleich der halben vordefinierten Maßeinheit ist. Diese Ausgestaltung der Codespuren erlaubt einerseits das Auswählen eines Kanals bzw. einer Gruppe von Auslesebereichen der Auslesevorrichtung zur eindeutigen Bestimmung eines Codeworts, wie weiter oben erläutert. Andererseits wird eine vorteilhafte Erzeugung von Prüfsignalen zur Ermittlung von Prüfwerten ermöglicht.

Die Auswerteeinheit ist dazu ausgebildet, auf der Grundlage der erfassten zweiten Codespur ein Prüfsignal zu erzeugen, welches von der Relativposition zwischen dem ersten und dem zweiten Teil abhängig ist, und ferner dazu ausgebildet, den Prüfwert auf der Grundlage des Prüfsignals zu ermitteln. Das Prüfsignal gibt die Relativposition vorzugsweise jeweils über eine Periode der zweiten Codespur z.B. als digitale oder analoge Information an, d.h. die Relativposition wird jeweils innerhalb einer Periode aufgelöst. Durch das Prüfsignal wird ein Signal bereitgestellt, welches im Vergleich zu den beiden Codespuren eine höhere Auflösung der Relativposition besitzt und somit eine präzise Funktionsüberprüfung ermöglicht.

Das Prüfsignal ist stetig über die Periodenlänge der zweiten Codespur, sodass das Prüfsignal selbst periodisch mit der Periodenlänge und abschnittsweise stetig ist. Ferner ist es bevorzugt, dass das Prüfsignal linear abhängig von der Relativposition zwischen dem ersten und zweiten Teil ist. Das Prüfsignal kann z.B. auf der Grundlage einer Arkustangensfunktion ermittelt werden, die auf Signalen der Auslesevorrichtung zum Erfassen der zweiten Codespur beruht. Vorzugsweise weist die Arkustangensfunktion als Argument ein Verhältnis auf, welches aus einem Sinussignal und einem Cosinussignal der Auslesevorrichtung gebildet wird. Das Sinussignal und das Cosinussignal haben vorzugsweise eine Periodenlänge, die derjenigen der zweiten Codespur entspricht. Das Prüfsignal sollte vorzugsweise einen linearen oder zumindest bekannten und reproduzierbaren Verlauf aufweisen. Ein solches Prüfsignal kann z.B. durch die genannte Arkustangensfunktion erzeugt werden. Ein Prüfsignal mit diesen Eigenschaften kann mit vergleichsweise wenig Rechenaufwand erzeugt werden, wobei dennoch eine zuverlässige und präzise Funktionsüberprüfung auf der Grundlage von Prüfwerten möglich ist.

Gemäß einer Ausführungsform repräsentiert der Prüfwert eine Phasenlage des Prüfsignals relativ zu der erfassten ersten Codespur. Der Prüfwert kann mit vordefinierten Referenzwerten verglichen werden.

Der Prüfwert beruht auf einem Abtastwert des Prüfsignals, wobei die Auswerteeinheit dazu ausgebildet ist, den Abtastwert in Abhängigkeit von der erfassten ersten Codespur zu bestimmen. Die Bestimmung von Abtastwerten stellt eine besonders effiziente Form der Ermittlung von Prüfwerten dar.

Die Auswerteeinheit ist dazu ausgebildet, anhand der von der Ausleseeinrichtung erfassten ersten Codespur einen Wechsel von einem Bereich erster Art der ersten Codespur zu einem Bereich zweiter Art der ersten Codespur (oder umgekehrt) zu detektieren, wobei die Auswerteeinheit ferner dazu ausgebildet ist, den Abtastwert durch Abtasten des Prüfsignals bei einem, vorzugsweise jedem, detektierten Wechsel zwischen einem Bereich erster Art der ersten Codespur zu einem Bereich zweiter Art der ersten Codespur, oder umgekehrt, zu bestimmen. Mit anderen Worten können Wechsel zwischen den Bereichen erster und zweiter Art detektiert und für die Bestimmung der Prüfwerte herangezogen werden. Die Abtastpunkte für die Prüfwerte sind somit genau definiert und spiegeln diejenigen Bereiche der ersten Codespur wider, die für die Funktionstüchtigkeit der Vorrichtung besonders relevant sind.

Gemäß einer Ausführungsform ist die Auswerteeinheit dazu ausgebildet, den Prüfwert mit einem Prüfkriterium zu vergleichen und ein Fehlersignal zu erzeugen, wenn der Prüfwert das Prüfkriterium verletzt. Beispielsweise kann der Prüfwert mit einem Grenzwert, insbesondere einem minimalen und maximalen Grenzwert, verglichen werden, der einen zulässigen Bereich für den Prüfwert begrenzt. Wenn der Prüfwert jenseits des zulässigen Bereichs liegt, also die Grenzwerte überschreitet, wird ein Fehlersignal erzeugt. Dies kann durch die Vorrichtung selbst geschehen, wobei die Auswerteeinheit hierfür auch mit einer separaten Überwachungseinheit verbunden sein kann. Alternativ oder zusätzlich kann die Überwachung auch von einer externen Steuerung oder dergleichen übernommen werden, der einen jeweiligen Prüfwert von der Vorrichtung empfängt. Die Vorrichtung kann daher dazu ausgebildet sein, den Prüfwert an eine Datenverarbeitungseinrichtung oder dergleichen auszugeben.

Das Prüfkriterium kann einen ersten Toleranzbereich aufweisen, wobei das Prüfkriterium als verletzt gilt, wenn der Prüfwert außerhalb des ersten Toleranzbereichs liegt. Auf diese Weise kann ein möglicherweise unsicherer Betriebszustand detektiert werden, wobei diese Information für eine vorbeugende Wartung der Vorrichtung bereitgestellt werden kann. Ein zweiter Toleranzbereich bzw. ein zweites Grenzwertepaar kann vorgesehen werden, um eine (wahrscheinliche) Fehlfunktion der Vorrichtung, insbesondere eine fehlerhafte Positionsinformation anzuzeigen. In Ansprechen auf eine Verletzung des zweiten Toleranzbereichs kann aus Sicherheitsgründen eine Maschine automatisch abgeschaltet werden, die unter Verwendung der Vorrichtung betrieben wird. Alternativ kann eine solche Abschaltung empfohlen werden.

Das Prüfkriterium ist vorzugsweise in einem nicht-flüchtigen Speicher der Vorrichtung gespeichert. Es können auch mehrere Prüfkriterien gespeichert sein. Das Prüfkriterium wird vorzugsweise nach einer Kalibrierung der Vorrichtung gespeichert, wobei nachträgliche Modifikationen des Prüfkriteriums vorgenommen werden können, insbesondere während eines Betriebs der Vorrichtung.

Gemäß einer Ausführungsform kann für die Vorrichtung eine Betriebsart gewählt werden, in der Extremwerte der Prüfwerte (Minimal- und/oder Maximalwerte) für die Funktionsüberprüfung herangezogen werden. Die Extremwerte weisen jeweils den geringsten Abstand zu den definierten Grenzwerten auf. Durch die Beschränkung auf Extremwerte werden vergleichsweise wenige Prüfwerte verarbeitet und/oder übertragen. Für diese Betriebsart kann ein Bereich definiert werden, innerhalb dem die Extremwerte gesucht werden. Dabei kann es sich um einen zeitlichen oder räumlichen Bereich handeln, wie z.B. um eine bestimmte Anzahl von Perioden der zweiten Codespur oder einen bestimmten Bereich der Absolutposition.

Die Auswerteeinheit kann dazu ausgebildet sein, die Prüfwerte während eines laufenden Betriebs der Vorrichtung zu ermitteln, insbesondere in Echtzeit. Eine Unterbrechung des Betriebs ist zur Funktionsüberprüfung somit nicht notwendig, wobei vorteilhaft Einflüsse berücksichtigt werden können, die oftmals nur im laufenden Betrieb auftreten, wie z.B. mechanische Überlastungen. Ferner ist es möglich, dass die Prüfwerte in einem nicht-flüchtigen Speicher der Vorrichtung gespeichert und z.B. mittels eines Diagnosegeräts zu einem geeigneten Zeitpunkt ausgelesen werden. Die Auswertung der Prüfwerte kann dann für eine Vielzahl von Prüfwerten gemeinsam vorgenommen werden. Auf diese Weise können Muster in den Prüfwerten detektiert und z.B. zur Früherkennung von zukünftigen Fehlfunktionen herangezogen werden. Beispielsweise können Verschleißerscheinungen in einem Lager des ersten und/oder zweiten Teils, z.B. einem Kugellager, frühzeitig erkannt werden, sodass ein Austausch des Lagers rechtzeitig in die Wege geleitet werden kann. Ebenfalls kann z.B. bei einem Winkelmesssystem eine exzentrische Verschiebung der Drehachse frühzeitig erkannt werden.

Gemäß einer Ausführungsform umfasst die Auslesevorrichtung mehrere separate Auslesebereiche, wobei die Auslesebereiche in eine erste Gruppe und eine zweite Gruppe unterteilt sind, und wobei die Auslesebereiche zwischen der ersten und zweiten Gruppe alternierend angeordnet sind. Der Prüfwert wird unter Verwendung zumindest einiger der Auslesebereiche ermittelt. Die Auslesebereiche können eine Länge aufweisen, die zumindest im Wesentlichen maximal der vordefinierten Maßeinheit entspricht. Die Auslesebereiche können abschnittsweise in einer Reihenfolge, bevorzugt entlang einer geraden oder kreisbogenförmigen Linie, hintereinander angeordnet sein. Möglich ist auch eine Anordnung gemäß einer Matrix, sodass die beiden Codespuren separat durch unterschiedliche Auslesebereiche erfasst werden können. Die Gruppen von Auslesebereichen können den zuvor beschriebenen Kanälen der Auslesevorrichtung entsprechen, die durch verschachtelte Anordnung von Photodioden implementiert sein können. Es ist möglich, dass zusätzliche Auslesebereiche vorgesehen sind, die eine abweichende Länge haben. So ist es möglich, dass zur Erfassung der ersten und zweiten Codespur jeweils Auslesebereiche vorgesehen sind, die in zwei Gruppen bzw. Kanäle unterteilt sind, die jeweils maximal eine Länge entsprechend der vordefinierten Maßeinheit aufweisen, wobei Signale der einzelnen Auslesebereiche jeweils eine Teilinformation des betreffenden Codeworts bereitstellen. Die Anzahl der Auslesebereiche jeder Gruppe entspricht zumindest der Anzahl der Stellen (Bits) des Codeworts.

Zusätzlich oder alternativ können Auslesebereiche vorgesehen sein, die z.B. in vier Gruppen bzw. Kanäle unterteilt sind und jeweils eine Länge von einem Viertel der vordefinierten Maßeinheit aufweisen oder in einer Matrix angeordnet sind und um ein Viertel der vordefinierten Maßeinheit zueinander versetzt sind. Auf diese Weise können Sinus- und Cosinus-artige Signale auf der Grundlage der zweiten Codespur erzeugt werden, welche wiederum zur Erzeugung des Prüfsignals verwendet werden können. Es ist auch möglich, jeweils zwei (unmittelbar) benachbarte der in vier Gruppen unterteilten Auslesebereiche zusammen auszuwerten, um auf diese Weise einen Auslesebereich mit einer Länge zu emulieren, die der vordefinierten Maßeinheit entspricht. Es ist auch denkbar, dass die Auslesebereiche in Form von Pixeln eines Sensorarrays ausgebildet sind und dass je nach Bedarf eine entsprechende Anzahl von Pixeln derart gemeinsam ausgewertet werden, dass dadurch die erste Codespur sicher ausgelesen werden kann und aus der zweiten Codespur sowohl das Prüfsignal und die Relativposition zur ersten Codespur gewonnen werden kann.

Gemäß einer Ausführungsform umfassen die mehreren Auslesebereiche benachbarte Auslesebereiche, die vorzugsweise jeweils in einem Raster angeordnet sind, das im Wesentlichen gleich einem Viertel (T/4) einer Periodenlänge der zweiten Codespur ist. Alternativ oder zusätzlich können die mehreren Auslesebereiche benachbarte Auslesebereiche umfassen, die zueinander versetzt angeordnet sind, insbesondere um ein Viertel einer Periodenlänge der zweiten Codespur. Die Auswerteeinheit ist dazu ausgebildet, ein Prüfsignal zur Ermittlung des Prüfwerts unter Verwendung der benachbarten Auslesebereiche zu erzeugen. Anders ausgedrückt können die Auslesebereiche für die Erfassung der zweiten Codespur in mehrere Gruppen derart unterteilt sein, dass sich in Abhängigkeit von der Relativposition zwischen dem ersten und zweiten Teil mittels der Auslesevorrichtung zueinander phasenverschobene Signale erzeugen lassen. Die phasenverschobenen Signale können mittels der Auswerteeinheit über einen geeigneten Rechenalgorithmus (z.B. Arcustangens-Rechnung, Clarke-Transformation) zur Erzeugung des Prüfsignals verwendet werden. Bei dem Prüfsignal kann es sich insbesondere um das Prüfsignal handeln, welches zuvor in Bezug auf bestimmte Eigenschaften (z.B. Linearität) und die Ermittlung von Abtastwerten erläutert worden ist.

Gemäß einer Ausführungsform umfasst der wenigstens eine Prüfwert erste und zweite Prüfwerte, wobei die ersten Prüfwerte unter Verwendung der ersten Gruppe von Auslesebereichen und die zweiten Prüfwerte unter Verwendung der zweiten Gruppe von Auslesebereichen ermittelt werden. Für die Funktionsüberprüfung kann eine besonders hohe Prüfdichte vorgesehen werden, indem beide Gruppen von Auslesebereichen zur Ermittlung mehrerer Prüfwerte herangezogen werden. Beispielswese kann der ersten Gruppe von Auslesebereichen ein erstes Prüfkriterium und der zweiten Gruppe von Auslesebereichen ein zweites Prüfkriterium zugeordnet sein, wobei die ersten Prüfwerte mit dem ersten Prüfkriterium und die zweiten Prüfwerte mit dem zweiten Prüfkriterium verglichen werden. Ein Fehlersignal wird erzeugt, wenn das erste und/oder zweite Prüfkriterium verletzt ist. Die Auswerteeinheit kann zur Durchführung dieser Schritte angepasst sein, sodass die Vorrichtung die Diagnose vollständig selbst durchführen kann. Alternativ oder zusätzlich können die Prüfwerte, wie zuvor erwähnt, an eine Datenverarbeitungseinrichtung ausgegeben werden, um die Funktionsüberprüfung zentral durchzuführen (z.B. für mehrere gleichartige Vorrichtungen).

Gemäß einer weiteren Ausführungsform kann zusätzlich zu der beschriebenen Auslesevorrichtung wenigstens eine weitere Auslesevorrichtung zur Erfassung der ersten und/oder zweiten Codespur vorgesehen sein. Die weitere Auslesevorrichtung ist vorzugsweise versetzt zu der (Haupt-) Auslesevorrichtung angeordnet. Der Abstand zwischen den Auslesevorrichtungen kann deutlich größer sein, als die Länge einzelner Auslesebereiche. In einem Beispiel eines Drehwinkelsensors kann die weitere Auslesevorrichtung beispielsweise um einen Winkel von mindestens 90 Grad, insbesondere 90 oder 180 Grad zu der Hauptauslesevorrichtung versetzt angeordnet sein. Auf der Grundlage der unter Verwendung beider Auslesevorrichtungen erfassten Codespuren kann dann eine noch umfangreichere Funktionsüberprüfung vorgenommen werden, weil weitere Einflüsse detektiert werden können. Zusätzlich oder alternativ zu einem Winkelversatz können die Hauptauslesevorrichtung und die weitere Auslesevorrichtung einen radialen Abstand bzw. Versatz zueinander aufweisen. Auf diese Weise können bestimmte Fehlerquellen, wie etwa eine Exzentrität einer Drehachse des ersten oder zweiten Teils noch zuverlässiger erkannt werden.

Gemäß einer Ausführungsform ist die Auswerteeinheit dazu ausgebildet, die Ermittlung der Relativposition zwischen dem ersten und dem zweiten Teil in Abhängigkeit von dem Prüfwert anzupassen, um eine anhand des Prüfwerts festgestellte Fehlfunktion der Vorrichtung zu kompensieren. Die Vorrichtung kann somit zusätzlich dazu angepasst sein, die anhand des Prüfwerts festgestellte Fehlfunktion zu korrigieren. In einem Beispiel ist die Auswerteeinheit dazu ausgebildet, auf der Grundlage der erfassten zweiten Codespur ein Steuersignal zur Auswertung der erfassten ersten Codespur zu erzeugen (insbesondere zur Auswahl eines Kanals bzw. einer Gruppe von Auslesebereichen zum Auslesen des aktuellen Abschnitts der ersten Codespur), wobei die Auswerteeinheit ferner dazu ausgebildet ist, im Falle einer anhand des Prüfwerts festgestellten Fehlfunktion der Vorrichtung auf der Grundlage des Prüfwerts einen Korrekturwert zu ermitteln und das Steuersignal mit dem Korrekturwert zu beaufschlagen, um die festgestellte Fehlfunktion zu beheben. Beispielsweise kann das Steuersignal um den Korrekturwert verschoben werden, um einen unerwünschten Versatz zwischen der ersten und zweiten Codespur zu kompensieren. Es ist auch möglich, das Steuersignal (oder Hilfssignal) in Abhängigkeit des Korrekturwerts abschnittsweise zu modifizieren. Das Steuersignal kann insbesondere ein Rechtecksignal mit der Periodenlänge der zweiten Codespur sein.

Gemäß einer Ausführungsform ist die Vorrichtung zur optischen Positions-, Längen-, oder Winkelbestimmung ausgebildet, wobei die Bereiche erster Art Bereiche relativ höherer Helligkeit und die Bereiche zweiter Art Bereiche relativ niedrigerer Helligkeit umfassen, und wobei die Ausleseeinrichtung zur optischen Erfassung der Codespur ausgebildet ist.

Die optische Erfassung der Codespuren mittels der Auslesevorrichtung kann im Auflicht und/oder im Durchlicht erfolgen. Hierbei können Bereiche relativ höherer Helligkeit eine höhere Remission und/oder Transmission aufweisen als Bereiche relativ niedrigerer Helligkeit. Bei der optischen Erfassung kann ein jeweiliger Auslesebereich z.B. von einer oder mehreren Photodioden gebildet sein. Hellere Bereiche können einer logischen "1" entsprechen, wohingegen dunklere Bereiche einer logischen "0" entsprechen können, oder umgekehrt.

Alternativ oder zusätzlich können die Codespuren magnetisch ausgebildet sein. Hierbei können die Bereiche erster Art Bereiche relativ stärkerer Magnetisierung und die Bereiche zweiter Art Bereiche relativ schwächerer Magnetisierung umfassen. Beispielsweise kann ein Bereich erster Art einen Magneten (oder ein magnetisches Material) aufweisen, wohingegen in einem Bereich zweiter Art kein Magnet (oder kein magnetisches Material) vorhanden ist. Auch können die Codespuren durch einen Wechsel zwischen Nord- und Süd-Polarisierung eine Unterscheidung zwischen den Bereichen erster und zweiter Art ermöglichen.

Bei einer magnetischen Markierung oder Codierung kann ein jeweiliger Auslesebereich z.B. einen oder mehrere Hall-Sensoren oder einen oder mehrere magnetoresistive Sensoren oder eine oder mehrere Spulen zur Detektierung eines Magnetfeldwechsels oder zur Detektierung von unterschiedlichen magnetischen Eigenschaften der Bereiche erster und zweiter Art der Codespuren umfassen.

Grundsätzlich sind auch beliebige andere Codierungen oder Kombinationen verschiedener Codierungen möglich.

Gemäß einer Ausführungsform sind der erste und der zweite Teil relativ zueinander entlang einer Geraden bewegbar. Zudem können sich die erste und zweite Codespur jeweils entlang der Geraden erstrecken, entlang derer der erste und der zweite Teil zueinander bewegbar sind. Ebenso können die Auslesebereiche entlang der Geraden angeordnet sein. Durch eine derartige Anordnung kann eine Linearverschiebung des ersten und des zweiten Teils relativ zueinander gemessen werden.

Gemäß einer Ausführungsform sind der erste und der zweite Teil relativ zueinander um eine (gemeinsame) Drehachse verdrehbar, wobei sich die erste und zweite Codespur entlang einer jeweiligen kreisförmigen Bahn erstrecken. Ferner können die Auslesebereiche entlang der kreisförmigen Bahn angeordnet sein. Die kreisförmigen Bahnen der Codespuren und Auslesebereiche können somit jeweils denselben oder einen ähnlichen Radius aufweisen und um die Drehachse des ersten und des zweiten Teils angeordnet sein.

Gemäß einer Ausführungsform ist ein Auslesebereich jeweils durch genau eine oder mehrere Photodioden gebildet.

Gemäß einer Ausführungsform werden die erste und/oder zweite Codespur mittels einer, insbesondere an dem ersten und/oder an dem zweiten Teil angebrachten, Lichtquelle beleuchtet. Bei der Lichtquelle kann es sich beispielsweise um eine LED handeln. Auch kann jedem einzelnen Auslesebereich eine separate Lichtquelle zugeordnet sein. Im Durchlicht befindet sich die erste und/oder zweite Codespur bevorzugt zwischen der Lichtquelle und der Auslesevorrichtung, wobei die Codespuren in diesem Fall Bereiche mit hoher Lichtdurchlässigkeit (Bereiche erster Art) und Bereiche mit geringer Lichtdurchlässigkeit (Bereiche zweiter Art) aufweist. Alternativ oder zusätzlich ist es möglich, dass die erste und/oder Codespur selbstleuchtend ist. Beispielsweise können die relativ helleren Bereiche der Codespuren durch LEDs gebildet werden. Im Falle einer nicht selbstleuchtenden Codespur wird die Helligkeit durch die Remission der Codespur an der jeweiligen Stelle bestimmt.

Gemäß einer weiteren vorteilhaften Ausführungsform kann eine zusätzliche erste Codespur vorgesehen sein, welche zu der vorgenannten ersten Codespur invertiert ist. Die Auswerteeinheit kann dann dazu ausgebildet sein, ein Differenzsignal aus den beiden ersten Codespuren zu erzeugen, um eine robustere Erfassung der ersten Codespur zu erzielen. Gleiches kann auch für die zweite Codespur verwirklicht sein.

Die Auswerteeinheit und weitere elektronische Komponenten der Vorrichtung können einen programmierbaren Mikroprozessor oder programmierbare Logikbausteine (z.B. FPGA) aufweisen, um die vorgesehenen Funktionen zu implementieren. Hierzu kann z.B. die Auswerteeinheit ein Rechenwerk sowie einen oder mehrere nicht-flüchtige Speicher aufweisen. Zudem kann die Auslesevorrichtung als optischer ASIC ausgebildet sein, wobei die Auswerteinheit in die Auslesevorrichtung integriert sein kann. Ferner kann die die Vorrichtung eine oder mehrere Datenschnittstellen zur Ausgabe der Prüfwerte und/oder zur Ausgabe von Fehlersignalen aufweisen, wobei die Datenschnittstelle mit der Auswerteeinheit verbunden ist. Die Datenschnittstelle kann auch zur Ausgabe der ermittelten Relativposition vorgesehen sein.

Ein weiterer Aspekt der Erfindung liegt in einem Verfahren zur Funktionsüberprüfung einer Vorrichtung zur Positions-, Längen-, oder Winkelbestimmung, wobei die Vorrichtung insbesondere nach einer der beschriebenen Ausführungsformen ausgebildet ist. Das Verfahren weist zumindest folgende Schritte auf: Ermitteln eines Prüfwerts auf der Grundlage einer erfassten ersten Codespur und einer erfassten zweiten Codespur der Vorrichtung, wobei die erste Codespur Bereiche erster Art und Bereiche zweiter Art umfasst, wobei die Bereiche erster und zweiter Art eine Codierung zur Positions-, Längen-, oder Winkelbestimmung schaffen, wobei die Bereiche erster und zweiter Art jeweils eine Länge aufweisen, die gleich einem Vielfachen einer vordefinierten Maßeinheit ist, wobei die zweite Codespur periodisch mit einer Periodenlänge ausgebildet ist, die gleich einem Vielfachen der vordefinierten Maßeinheit ist, wobei die zweite Codespur Bereiche erster Art und Bereiche zweiter Art umfasst, welche jeweils eine Länge aufweisen, die gleich der vordefinierten Maßeinheit ist, und wobei die Bereiche erster und zweiter Art der zweiten Codespur zu den Bereichen erster und zweiter Art der ersten Codespur einen Versatz aufweisen; Vergleichen des Prüfwerts mit einem Prüfkriterium und Erzeugen eines Fehlersignals, wenn der Prüfwert das Prüfkriterium verletzt; Erzeugen eines Prüfsignals auf der Grundlage der erfassten zweiten Codespur, welches zumindest abschnittsweise stetig und abhängig von der Relativposition zwischen dem ersten und dem zweiten Teil ist, wobei das Ermitteln des Prüfwerts ferner auf der Grundlage des Prüfsignals erfolgt, wobei der Prüfwert auf einem Abtastwert des Prüfsignals beruht, der in Abhängigkeit von der erfassten ersten Codespur bestimmt wird; Detektieren eines Wechsels zwischen einem Bereich erster Art der ersten Codespur und einem Bereich zweiter Art der ersten Codespur anhand der erfassten ersten Codespur und Bestimmen des Abtastwerts durch Abtasten des Prüfsignals bei einem, insbesondere jedem, detektierten Wechsel von einem Bereich erster Art der ersten Codespur zu einem Bereich zweiter Art der ersten Codespur und/oder umgekehrt.

Es versteht sich, dass Verfahrensmerkmale, die im Zusammenhang mit den beschriebenen Ausführungsformen der Vorrichtung offenbart sind, ganz oder teilweise Bestandteil des Verfahrens sein können. Im Übrigen gelten zu dem erfindungsgemäßen Verfahren die Ausführungen zu der erfindungsgemäßen Vorrichtung entsprechend, dies gilt insbesondere für Vorteile und Ausführungsformen.

Die Erfindung wird im Folgenden lediglich beispielhaft anhand der Figuren beschrieben, die Folgendes schematisch zeigen:
- Fig. 1: eine Vorrichtung zur Winkelbestimmung;
- Fig. 2: eine erste und zweite Codespur sowie Anordnungen von Auslesebe-reichen zur Erfassung der Codespuren;
- Fig. 3A: die Codespuren von Fig. 2 in einer Überlagerung mit Ausleseberei-chen von Fig. 2;
- Fig. 3B: die Codespuren von Fig. 2 in einer weiteren Überlagerung mit Ausle-sebereichen von Fig. 2;
- Fig. 4: ein Steuersignal sowie ein erstes und ein zweites Signal, die unter Verwendung der Auslesebereiche von Fig. 2 erzeugt sind;
- Fig. 5: die Überlagerung der ersten Codespur mit den Auslesebereichen von Fig. 2 sowie mehrere verschobene Fassungen von Erfassungs-signalen der ersten Codespur;
- Fig. 6: die Überlagerung der zweiten Codespur mit den Auslesebereichen von Fig. 2 sowie ein Prüfsignal für die Ermittlung eines Prüfwerts zur Funktionsüberprüfung der Vorrichtung von Fig. 1;
- Fig. 7: die Überlagerung der ersten Codespur mit den Auslesebereichen von Fig. 2, die verschobenen Fassungen von Erfassungssignalen der ersten Codespur von Fig. 5 sowie das Prüfsignal von Fig. 6;
- Fig. 8: das Steuersignal von Fig. 4 in zwei gegeneinander verschobenen Fassungen.

In den Figuren werden sich entsprechende Elemente mit denselben Bezugszeichen gekennzeichnet.

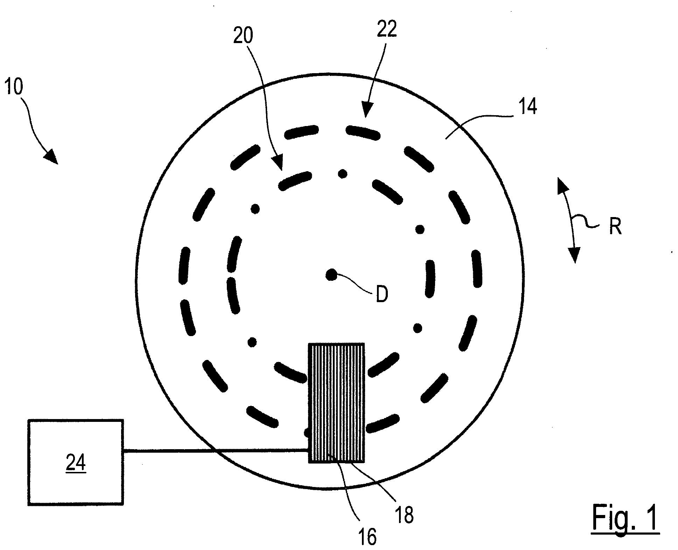

Fig. 1 zeigt eine Vorrichtung 10, welche zur optischen Winkelbestimmung dient. Die Vorrichtung 10 kann z.B. als Drehwinkelgeber für einen Servomotor (nicht gezeigt) eingesetzt sein, wobei der Drehwinkelgeber den Drehwinkel einer Motorwelle des Servomotors angibt.

Die Vorrichtung 10 umfasst eine erste Codespur 20 und eine zweite Codespur 22, welche beide an einem ersten Teil 14 der Vorrichtung 10 angebracht sind und von dem ersten Teil 14 mitbewegt werden. Der erste Teil 14 ist eine Maßverkörperung, welche um eine Drehachse D drehbar gelagert ist, sodass der erste Teil 14 in beide Drehrichtungen R gedreht werden kann. Die Drehachse D kann beispielsweise durch Kugellager (nicht gezeigt) gelagert sein.

Die Vorrichtung 10 umfasst ferner eine Auslesevorrichtung 16, welche an einem zweiten Teil 18 der Vorrichtung 10 angebracht ist und mit dem zweiten Teil 18 eine ortsfeste Einheit bildet, die insbesondere als optischer ASIC oder kompaktes Modul ausgebildet ist. Der erste Teil 14 und der zweite Teil 18 bzw. die Codespuren 20, 22 und die Auslesevorrichtung 16 sind relativ zueinander bewegbar und zwar durch Drehung des ersten Teils 14 in eine der beiden Drehrichtungen R.

Die Auslesevorrichtung 16 umfasst nicht näher gezeigte Photodioden, welche zumindest teilweise hintereinander und z.B. als Matrix an der Auslesevorrichtung 16 angebracht und durch Schraffierung in Fig. 1 angedeutet sind. Jeweils eine einzelne Photodiode oder eine Gruppe von mehreren Photodioden dient als separater bzw. einzelner Auslesebereich der Auslesevorrichtung 16, wie nachfolgend noch genauer erläutert wird.

Die Photodioden der Auslesevorrichtung 16 erfassen die erste und zweite Codespur 20, 22 jeweils teilweise, wobei im Bereich der Auslesevorrichtung 16 zeitgleich mehrere Markierungen angeordnet sind, die in Fig. 1 rein beispielhaft durch Strichlinien und Punkte der Codespuren 20, 22 angedeutet sind. Durch Drehung des ersten Teils 14 werden die Codespuren 20, 22 sukzessive an der Auslesevorrichtung 16 vorbeigeführt, wobei auf der Grundlage der durch die Auslesevorrichtung 16 erfassten Codespuren 20, 22 die Winkelstellung des ersten Teils 14 mithilfe der Auswerteeinheit 24 ermittelt wird. Die Auswerteeinheit 24 ist mit der Auslesevorrichtung 16 verbunden.

Im Betrieb der Vorrichtung 10 werden die Codespuren 20, 22 mittels einer (nicht gezeigten) Lichtquelle beleuchtet, welche an dem zweiten Teil 18 befestigt ist. Die Codespuren 20, 22 remittieren das Licht der Lichtquelle, wobei das remittierte Licht von den Photodioden empfangen wird. In den Photodioden entstehen dadurch elektrische Signale, welche an die Auswerteeinheit 24 weitergeleitet werden. Die Auswerteeinheit 24 binarisiert die Signale der einzelnen Photodioden, sodass sich bei einer Photodiode, welche auf einen jeweiligen dunklen Bereich der Codespuren 20, 22 (in der Fig. 1 schwarz dargestellt) als Signal eine "0" ergibt, wohingegen sich bei einem hellen Bereich (in der Fig. 1 weiß dargestellt) als Signal eine "1" ergibt. Es ist auch eine umgekehrte Zuordnung möglich.

Es versteht sich, dass die Vorrichtung 10 auch im Durchlicht betrieben werden könnte, wobei die Lichtquelle dann derart z.B. am zweiten Teil 18 befestigt sein könnte, um Licht durch die hellen Bereiche hindurch zu den Photodioden zu emittieren.

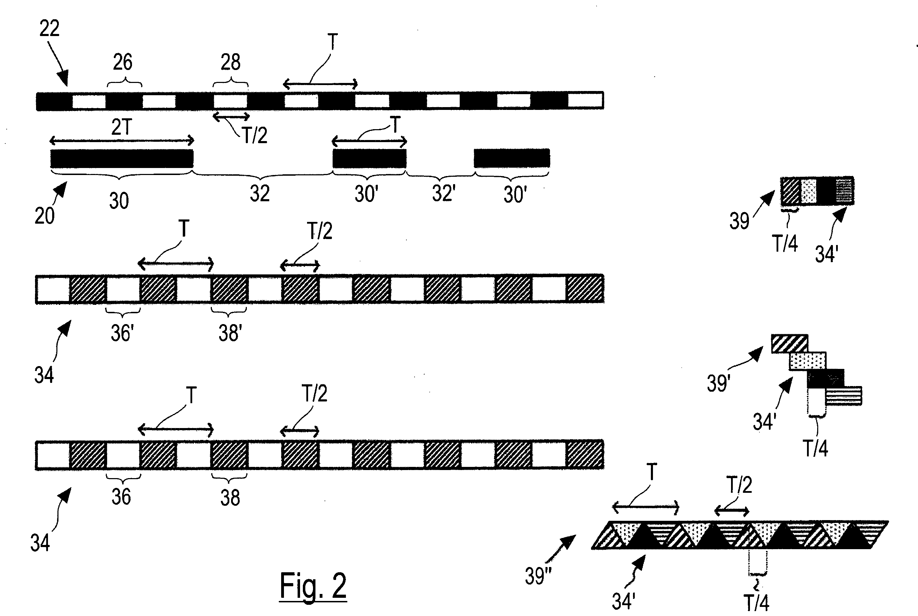

Fig. 2 zeigt einen jeweiligen Ausschnitt der ersten Codespur 20 und der zweiten Codespur 22, wobei die Codespuren 20, 22 lediglich zu Erläuterungszwecken begradigt dargestellt sind, d.h. die Codespuren 20, 22 sind nicht entlang einer jeweiligen Kreisbahn gekrümmt dargestellt wie in Fig. 1. Die erste Codespur 20 weist Bereiche erster Art 30, 30' (in Fig. 2 schwarz dargestellt) sowie Bereiche zweiter Art 32, 32' auf (in Fig. 2 weiß dargestellt). Es ist zu erkennen, dass die Bereiche erster und zweiter Art 30, 30', 32, 32' entlang der Erstreckung der Codespur 20 abwechselnd hintereinander angeordnet sind und teilweise unterschiedliche Längen aufweisen. So weisen der Bereich erster Art 30 und der Bereich zweiter Art 32 jeweils eine Länge von 2T auf. Die Bereiche 30', 32' weisen hingegen jeweils eine Länge T auf, d.h. diese Bereiche 30', 32' sind halb so lang wie die Bereiche 30, 32. Die Bereiche 30, 30', 32, 32' bilden jeweils Codeabschnitte, die zusammen eine Codierung bilden, die auf einem Pseudo-Random-Code (PRC) beruht. Auf diese Weise werden unterschiedliche Winkelstellungen des ersten Teils 14 codiert. Es versteht sich, dass die gezeigten Längen lediglich beispielhaft sind und auch abweichend hiervon festgelegt sein können.

Die zweite Codespur 22 weist Bereiche erster Art 26 und Bereiche zweiter Art 28 auf, die entlang der Erstreckung der zweiten Codespur 22 abwechselnd hintereinander angeordnet sind und jeweils eine Länge T/2 aufweisen, d.h. die Bereiche 26, 28 sind jeweils halb so lang wie die Bereiche 30', 32'. Die zweite Codespur 22 kann somit auch als Binärspur bezeichnet werden, wobei die zweite Codespur 22 periodisch mit der Periodenlänge T der zweiten Codespur 22 ist. Die Bereiche erster und zweiter Art 26, 28 der zweiten Codespur 22 sind gleichartig zu den ersten und zweiten Bereichen 30, 32 der ersten Codespur 20 ausgebildet.

Es ist zu verstehen, dass die Länge T/2 eine gemeinsame Maßeinheit für die erste und zweite Codespur 20, 22 bildet, wobei die Längen der Bereiche erster und zweiter Art der beiden Codespuren 20, 22 jeweils ein Vielfaches der gemeinsamen Maßeinheit T/2 betragen. So sind die Bereiche erster und zweiter Art 26, 28 der zweiten Codespur 22 einmal so lang wie die Maßeinheit T/2. Die Bereiche 30', 32' der ersten Codespur 20 sind doppelt so lang wie die Maßeinheit T/2, d.h. T. Die Bereiche 30, 32 der ersten Codespur 20 sind viermal so lang wie die Maßeinheit T/2, d.h. 2T. Ferner ist zu erkennen, dass die Bereiche erster und zweiter Art 26, 28, 30, 30' zwischen der ersten und zweiten Codespur 20, 22 jeweils einen Versatz von der halben Maßeinheit aufweisen, d.h. T/4. Es ist zu verstehen, dass ein entsprechender Versatz auch durch geeignete Anordnung von Auslesebereichen erzielt werden kann, beispielsweise durch einen Versatz zwischen Auslesebereichen.

In Fig. 2 sind ferner rein schematisch Auslesebereiche 34 der Auslesevorrichtung 16 dargestellt, die in einem Raster von T/2, d.h. der gemeinsamen Maßeinheit aneinandergereiht sind. Die Auslesebereiche 34 sind in eine erste Gruppe 36 (in Fig. 2 weiß dargestellt) und eine zweite Gruppe 38 (in Fig. 2 schraffiert dargestellt) unterteilt, wobei die Auslesebereiche 34 zwischen den Gruppen 36, 38 abwechselnd hintereinander angeordnet sind. Die beiden Gruppen 36, 38 sind zueinander in Erstreckungsrichtung der Codespur 22 um T/2 versetzt angeordnet. Daher ergibt sich für die Auslesebereiche 34 dieselbe Periodenlänge T wie bei der zweiten Codespur 22. Die Auslesebereiche 34 der Gruppen 36 und 38 sind vorzugsweise zum Erfassen der ersten Codespur 20 vorgesehen. Weitere Auslesebereiche 34 mit entsprechend ausgebildeten Gruppen 36' 38' können zum direkten Erzeugen eines Steuersignals 40 aus der zweiten Codespur 22 vorgesehen sein.

Zusätzlich oder alternativ werden ähnlich geartete Anordnungen der Auslesebereiche 34' der Gruppe 39 zur Bestimmung einer Relativposition zwischen dem ersten und zweiten Teil 14, 18 und zur Erzeugung eines Prüfsignals 62 aus der zweiten Codespur 22 verwendet, wie nachfolgend noch genauer erläutert wird. Von dem Prüfsignal 62 kann auch das Steuersignal 40 abgeleitet werden.

In der Gruppe 39 sind die Auslesebereiche 34' in einem Raster von T/4 angeordnet. Dabei sei auch erwähnt, dass auch ein von T/4 abweichendes Raster möglich ist. Die genannten weiteren Auslesebereiche 34' können, wie für die Gruppe 39 dargestellt, in Erstreckungsrichtung der zweiten Codespur 22 hintereinander angeordnet sein. Alternativ können die Auslesebereiche 34', wie in Fig. 2 für die Gruppenvariante 39' dargestellt, quer zur Erstreckungsrichtung der Codespur 22 versetzt verschachtelt angeordnet sein. Dies erlaubt eine größere Länge für die einzelne Auslesebereiche, z.B. T/2. Es ist jedoch eine breitere Codespur erforderlich.

Desweiteren kann die Form der Auslesebereiche 34', wie in Fig. 2 für die Gruppe 39" beispielhaft dargestellt, alternativ so angepasst werden, dass dadurch der Signalverlauf an eine Sinusform angenähert wird. Die Auslesebereiche der Gruppen 39, 39', 39" sind jeweils in vier Untergruppen unterteilt, die abwechselnd hintereinander angeordnet sind. Damit ermöglichen die benachbarten Auslesebereiche mit einem Versatz von T/4 die Erzeugung eines Prüfsignals, wie nachfolgend noch erläutert wird. Es sei erwähnt, dass auch eine andere Anzahl von Untergruppen, z. B. 3, 5 oder 6 möglich ist.

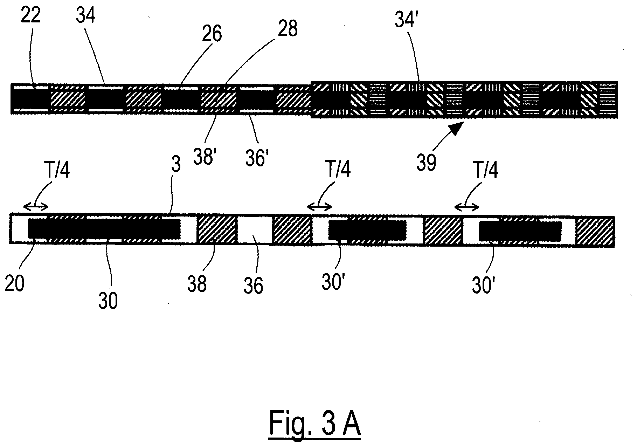

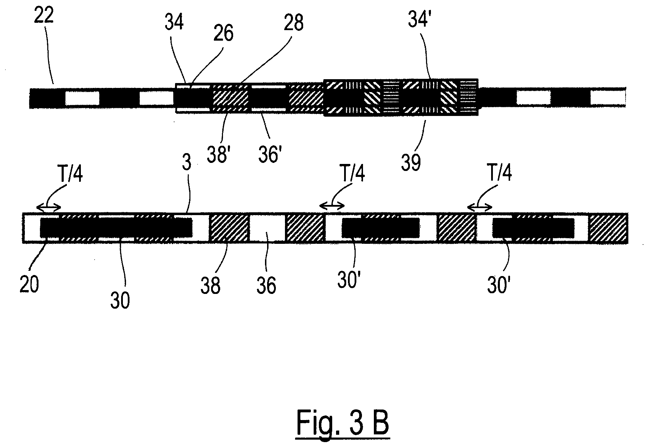

In Fig. 3A sind die Auslesebereiche 34, 34' der Gruppen 36, 38, 36', 38', 39 in einer Überlagerung mit der ersten und zweiten Codespur 20, 22 gezeigt. Vorzugsweise sind die Auslesebereiche 34 und 34' bezüglich der beiden Codespuren 20, 22 jedoch gruppenweise ausgerichtet, d.h. die Codespur 20 wird durch das Gruppenpaar 36, 38 von Auslesebereichen 34 erfasst, während die Codespur 22 von den Gruppen 36' 38' von Auslesebereichen 34 und/oder der Gruppe 39 mit Untergruppen von Auslesebereichen 34' erfasst wird. Wie in Fig. 2 gezeigt und zuvor beschrieben, sind für die Codespur 22 alternativ oder zusätzlich zu den Auslesebereichen 34 der Gruppen 36', 38' vorzugsweise stets Auslesebereiche gemäß den Varianten der Gruppen 39, 39' oder 39" vorgesehen. Fig. 3B entspricht einer Variante von Fig. 3A, wobei die Anzahl von Auslesebereichen 34, 34' für die zweite Codespur 22 gegenüber dem Fall von Fig. 3A verringert ist. Dies verdeutlicht, dass auch abweichende Konfigurationen von Auslesebereichen möglich sind.

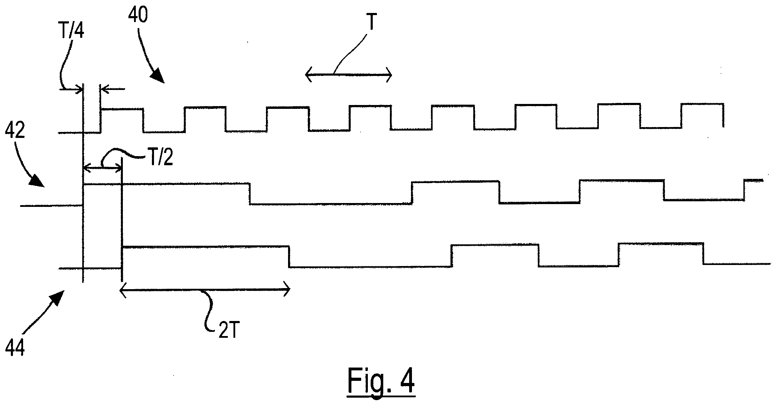

Durch Verwendung der Auslesebereiche 34 der Gruppe 36', 38' (bzw. 39, 39', 39") wird auf der Grundlage der erfassten zweiten Codespur 22 ein Steuersignal 40 erzeugt, welches in Fig. 4 ausschnittsweise gezeigt ist. Es ist zu erkennen, dass das Steuersignal 40 eine Rechteckform mit der Periodenlänge T der zweiten Codespur 22 aufweist. Das Steuersignal 40 wird vorzugsweise durch Differenzbildung zwischen den Signalen der Auslesebereiche 34 der ersten Gruppe 36' und den Signalen der Auslesebereiche der zweiten Gruppe 38' erzeugt. Beispielsweise kann eine Komparatorschaltung eingesetzt werden.

Alternativ kann das Steuersignal 40 von dem weiter unten noch genauer beschriebenen Prüfsignal 62 abgeleitet werden, welches aus den Signalen der Auslesebereiche 34' der Gruppe 39 gebildet wird. Wie später erläutert hat dies den Vorteil, dass das Steuersignal 40 bei Bedarf mit einem Korrekturwert beaufschlagt und für den Ausgleich von Toleranzen verschoben werden kann. Wird das Steuersignal 40 so erzeugt, genügt es, für die zweite Codespur 22 die Auslesebereiche 34' der Gruppe 39 vorzusehen. Auf die Auslesebereiche 34 der Gruppen 36' und 38' kann in diesem Fall verzichtet werden.

In Fig. 4 sind ferner ein erstes Signal 42 und ein zweites Signal 44 gezeigt, wobei das erste Signal 42 unter Verwendung des n-ten Auslesebereichs der ersten Gruppe 36 und das zweite Signal 44 unter Verwendung des n-ten Auslesebereichs der zweiten Gruppe 38 von Auslesebereichen 34 erzeugt wird. Dementsprechend entspricht die jeweilige Signalform des ersten und zweiten Signals 42, 44 der Abfolge von ersten und zweiten Bereichen 30, 32, 30', 32' der ersten Codespur 20. Das erste Signal 42 und zweite Signal 44 sind um die Maßeinheit T/2 phasenversetzt. Dieser Phasenversatz ergibt sich aus dem Versatz T/2 zwischen der ersten und zweiten Gruppe 36, 38 von Auslesebereichen 34. Ferner ist zu erkennen, dass das Steuersignal 40 jeweils um T/4 gegenüber dem ersten Signal 42 und dem zweiten Signal 44 phasenversetzt ist. Hierdurch ist eine jeweilige Signal- bzw. Rechteckflanke des ersten Signals 42 und des zweiten Signals 44 jeweils T/4 von einer jeweiligen Signal- bzw. Rechteckflanke des Steuersignals 40 entfernt. Dieser Effekt ergibt sich aus dem Versatz T/4 zwischen der ersten Codespur 20 und der zweiten Codespur 22 bzw. aus einem entsprechenden Versatz der Ausleseelemente für die erste Codespur 20 zu den Ausleseelementen für die zweite Codespur 22.

Durch Verwendung des Steuersignals 40 wird mittels der Auswerteeinheit 24 jeweils diejenige Gruppe von Auslesebereichen 36, 38 ausgewählt, die ein eindeutiges Auslesen der ersten Codespur 20 sicherstellt. Beispielsweise kann bei der Überlagerung der Auslesebereiche 34 mit der ersten Codespur 20 in Fig. 3 die zweite Gruppe 38 (in Fig. 3 schraffiert) ausgewählt werden.

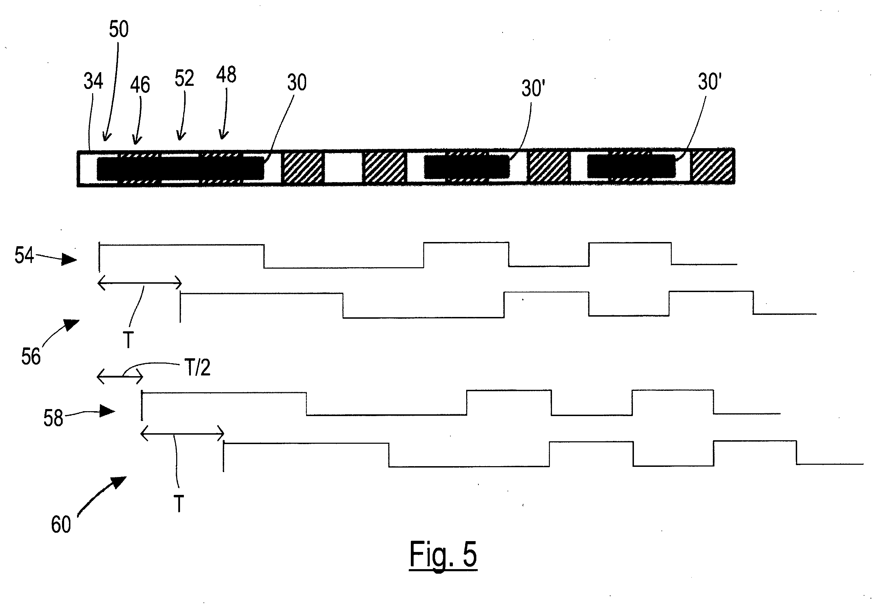

In Fig. 5 ist schematisch dargestellt, wie ein jeweiliger Auslesebereich 34 die erste Codespur 20 erfasst. Mit Bezug auf einen ersten Auslesebereich 50 der ersten Gruppe 36 ergibt sich das Erfassungssignal 54. Mit Bezug auf einen benachbarten zweiten Auslesebereich 52 der ersten Gruppe 36 ergibt sich das Erfassungssignal 56, wobei das Erfassungssignal 56 im Vergleich zu dem Erfassungssignal 54 um T versetzt ist. Entsprechend sind auch weitere Erfassungen benachbarter Auslesebereiche der ersten Gruppe 36 jeweils um T versetzt (nicht gezeigt).

Entsprechend zu den Auslesebereichen 50, 52 werden durch einen ersten Auslesebereich 46 der zweiten Gruppe 38 sowie durch einen zweiten Auslesebereich 48 der zweiten Gruppe 38 Erfassungssignale 58 und 60 der ersten Codespur 20 erfasst, die zueinander um T versetzt sind. Entsprechend sind auch weitere Erfassungen benachbarter Auslesebereiche der zweiten Gruppe 38 jeweils um T versetzt (nicht gezeigt). Ferner ergibt sich durch das Raster T/2, in dem die Gruppen 36, 38 der Auslesebereiche 34 angeordnet sind, ein entsprechender Versatz von T/2 zwischen den Erfassungssignalen 54, 56 und den Erfassungssignalen 58, 60 der ersten Codespur 20. Es ist zu verstehen, dass die Erfassungssignale 54, 56, 58, 60 stellvertretend für erste bzw. zweite Signale 42, 44 stehen, die unter Verwendung der Auslesebereiche 34 erzeugt werden.

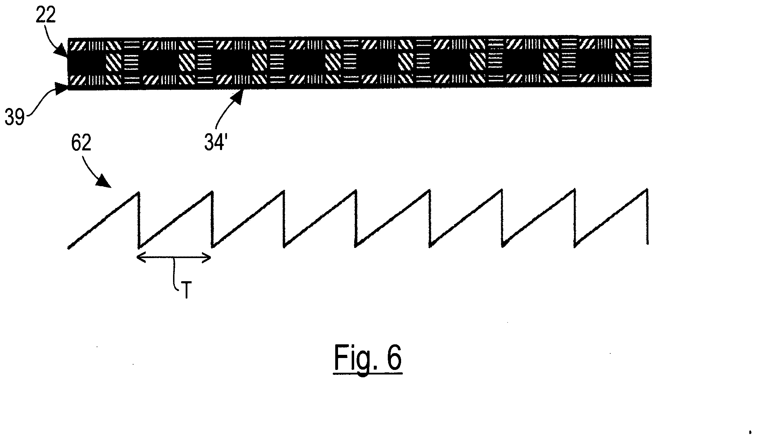

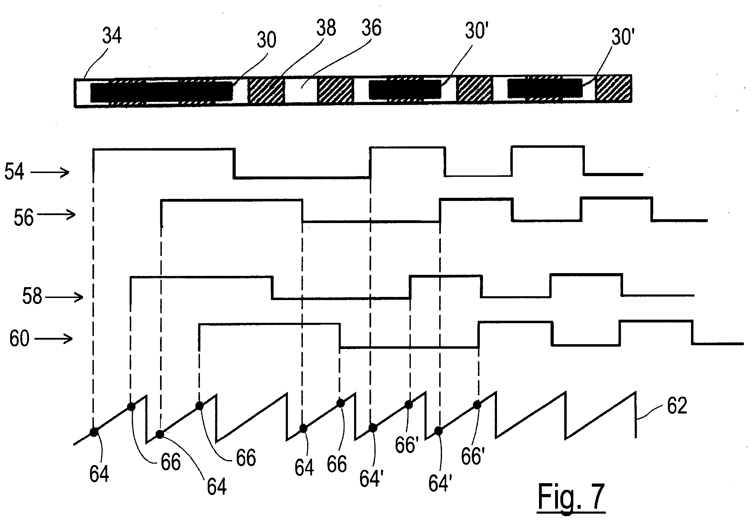

Mit Bezug auf Fig. 6 und Fig. 7 wird eine Ermittlung von Prüfwerten zur Funktionsüberprüfung der Vorrichtung 10 erläutert.

Auf der Grundlage der erfassten zweiten Codespur 22 wird unter Verwendung der Auswerteeinheit 24 ein Prüfsignal 62 (in Form einer Relativposition innerhalb einer Periode der zweiten Codespur 22) erzeugt, welches periodisch mit der Länge T ist. Die Länge T entspricht der Periodenlänge T der zweiten Codespur 22, die in Überlagerung mit den Auslesebereichen 34' in Fig. 6 oberhalb des Prüfsignals 62 gezeigt ist. Das Prüfsignal 62 entspricht einer schematischen Darstellung eines Winkelwerts bzw. einer Relativposition und kann daher auch als Prüfwinkel bezeichnet werden.

In Fig. 7 ist das Ermitteln von ersten Prüfwerten 64, 64' und zweiten Prüfwerten 66, 66' als Abtastwerte des Prüfsignals 62 veranschaulicht. Das Abtasten erfolgt auf der Grundlage der Erfassungssignale 54, 56, 58, 60 der ersten Codespur 20. Ein jeweiliger Wechsel zwischen Bereichen erster Art 30, 30' und Bereichen zweiter Art 32, 32' der Codespuren definiert einen betreffenden Abtastpunkt. Ein jeweiliger Wechsel zwischen Bereichen erster Art 30, 30' und Bereichen zweiter Art 32, 32' erzeugt eine Signalflanke oder Rechteckflanke in den Erfassungssignalen 54, 56, 58, 60, die einen Signalzustandswechsel repräsentiert. Dies ist in Fig. 7 beispielhaft für die linksseitigen Rechteckflanken dargestellt, wobei Strichlinien zum Prüfsignal 62 veranschaulichen, an welchen Abtastpunkten das Prüfsignal 62 abgetastet wird. Es ist zu erkennen, dass die linksseitigen Rechteckflanken der Erfassungssignale 54, 56, die mit linksseitigen Enden der Bereiche erster Art 30 korrespondieren können, jeweils mit einem relativ niedrigen Betrag der ersten Prüfwerte 64 einhergehen. Auch die weiteren linksseitigen Rechteckflanken, die mit Bereichen erster Art 30' korrespondieren, führen bezüglich ihrer linksseitigen Enden zu einem niedrigen Betrag der ersten Prüfwerte 64', die bei korrekter Funktionsweise der Vorrichtung ähnlich zu den ersten Prüfwerten 64 sind. Für den Bereich erster Art 30 der Codespur mit dem Erfassungssignal 56 ist beispielhaft gezeigt, dass sich auch für die rechtsseitigen Enden der Bereiche erster Art 30 niedrige erste Prüfwerte 64 ergeben. Insgesamt ergibt sich für die Erfassungssignale 54, 56 bei jedem Wechsel zwischen den Bereichen erster Art 30, 30' und den Bereichen zweiter Art 32, 32' ein niedriger erster Prüfwert 64, 64', der bei Fehlerfreiheit stets ähnlich ist. Für eine maximale Prüftiefe ist es bevorzugt, bei jedem Wechsel zwischen den Bereichen erster und zweiter Art 30, 32 einen jeweiligen ersten Prüfwert 64, 64' zu ermitteln. Es ist zu beachten, dass die Erfassungssignale 54, 56 durch die Auslesebereiche 34 der ersten Gruppe 36 erfasst sind. Der Begriff "ähnlich" in Bezug auf die Prüfwerte bedeutet, dass ähnliche Prüfwerte im Vergleich zu den übrigen auftretenden Prüfwerten eine geringe Abweichung voneinander haben, z.B. eine vordefinerte maximale Abweichung. Die Abweichung kann in Abhängigkeit von einem erwarteten Wertebereich aller Prüfwerte definiert sein.

In Fig. 7 ist das Ermitteln von ersten Prüfwerten 64, 64' und zweiten Prüfwerten 66, 66' als Abtastwerte des Prüfsignals 62 veranschaulicht. Das Abtasten erfolgt auf der Grundlage der ausgelesenen ersten Codespur, wobei die Photodioden der Gruppe 36 der Auslesebereiche 34 die Erfassungssignale 54, 56, und die Gruppe 38 der Auslesebereiche 34 die Erfassungssignale 58, 60 erfassen, wobei ein jeweiliger Wechsel zwischen Bereichen erster Art 30, 30' und Bereichen zweiter Art 32, 32' einen betreffenden Abtastpunkt definiert. Ein jeweiliger Wechsel zwischen Bereichen erster Art 30, 30' und Bereichen zweiter Art 32, 32' erzeugt eine Signalflanke oder Rechteckflanke, der einen Signalzustandswechsel des jeweiligen Erfassungssignals repräsentiert. Dies ist in Fig. 7 beispielhaft für einige Wechsel zwischen den Bereichen erster Art 30, 30' und den Bereichen zweiter Art 32, 32' dargestellt, wobei Strichlinien zum Prüfsignal 62 veranschaulichen, an welchen Abtastpunkten das Prüfsignal 62 abgetastet wird.

Es ist zu erkennen, dass die Signalflanken der mit der ersten Gruppe 36 der Auslesebereiche 34 erfassten Codespuren mit den Erfassungssignalen 54, 56 jeweils mit einem relativ niedrigen Betrag der Prüfwerte 64 und 64' einhergehen. Auch die weiteren Signalwechsel der erfassten Codespuren mit den Erfassungssignalen 54 und 56 führen zu einem niedrigen Betrag der ersten Prüfwerte 64', die bei korrekter Funktionsweise der Vorrichtung ähnlich zu den ersten Prüfwerten 64 sind. Es ist zu beachten, dass die Erfassungssignale 54, 56 durch die Auslesebereiche 34 der ersten Gruppe 36 erfasst sind.

Die entsprechenden Signalflanken der mit der zweiten Gruppe 38 der Auslesebereiche 34 erfassten Codespur mit den Erfassungssignalen 58, 60 gehen jeweils mit einem relativ hohen Betrag der Prüfwerte 66 und 66' einher. Auch die weiteren Signalwechsel der erfassten Codespur mit den Erfassungssignalen 58 und 60 führen zu einem hohen Betrag der zweiten Prüfwerte 66', die bei korrekter Funktionsweise der Vorrichtung ähnlich zu den ersten Prüfwerten 66 sind. Es ist zu beachten, dass die Erfassungssignale 58, 60 durch die Auslesebereiche 34 der zweiten Gruppe 38 erfasst sind.

Grundsätzlich können Merkmale, die im Zusammenhang mit der Ermittlung von ersten Prüfwerten 64, 64' beschrieben sind, entsprechend auch für die Ermittlung von zweiten Prüfwerten 66, 66' verwirklicht sein und umgekehrt. Somit kann z.B. auch für die Erfassungssignale 58, 60 bei jedem Wechsel zwischen Bereichen erster und zweiter Art 30, 30', 32, 32' ein jeweiliger zweiter Prüfwert 66, 66' ermittelt werden.

Bei Betrachtung von Fig. 7 ist also zu verstehen, dass ein Wechsel zwischen einem Bereich erster Art 30 und einem Bereich zweiter Art 32 für die Erfassungssignale 54, 56, die von den Auslesebereichen der ersten Gruppe 36 erfasst werden, jeweils durch einen (niedrigen) ersten Prüfwert 64 abgebildet wird, der bei korrekter Funktion der Vorrichtung 10 stets ähnlich (z.B. im Wesentlichen konstant) ist. Ein Wechsel zwischen einem Bereich erster Art 30 und einem Bereich zweiter Art 32 für die Erfassungssignale 58, 60, die von den Auslesebereichen der zweiten Gruppe 38 erfasst werden, wird hingegen jeweils durch einen ähnlichen (hohen) zweiten Prüfwert 66, 66' abgebildet.

Die ersten und zweiten Prüfwerte 64, 64', 66, 66' sollten jeweils innerhalb eines Toleranzbereichs liegen. Zusätzlich wird vorzugsweise ein Toleranzbereich vorgesehen. Ein Prüfkriterium wird z.B. durch einen unteren Grenzwert G1 und einen oberen Grenzwert G2 gebildet, wobei die Grenzwerte ein Intervall [G1, G2] definieren. Sofern ein betreffender Prüfwert P innerhalb des Intervalls liegt, d.h. z.B. G1 <P<G2, gilt das Prüfkriterium als erfüllt, d.h es wird davon ausgegangen, dass die Vorrichtung 10 bezüglich des betreffenden Prüfwerts P fehlerfrei funktioniert. Liegt der Prüfwert P hingegen außerhalb des Intervalls, d.h. z.B. G2<P, dann gilt das Prüfkriterium als verletzt. Im Falle einer Verletzung des Prüfkriteriums wird von der Auswerteeinheit 24 ein Fehlersignal erzeugt, welches z.B. von einer übergeordneten Steuereinrichtung (nicht gezeigt) detektiert wird, sodass hierauf ein Betriebsstop oder eine andere Abhilfemaßnahme ergriffen werden kann. Es ist auch möglich, dass die Prüfwerte P über eine Datenschnittstelle der Vorrichtung (nicht gezeigt) ausgegeben werden, sodass die Auswertung und eine etwaige Erzeugung eines Fehlersignals z.B. von einer externen Überwachungseinheit vorgenommen wird (nicht gezeigt). Es versteht sich, dass für die ersten Prüfwerte 64 und für die zweiten Prüfwerte 66 ein jeweils zugeordnetes Prüfkriterium vorgesehen werden kann, wobei die jeweiligen Intervalle [G1, G2] aufgrund der unterschiedlichen Höhe der Prüfwerte verschieden sind.

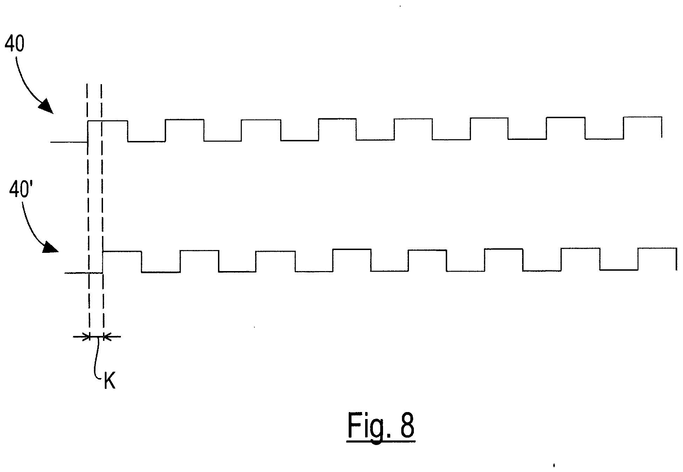

Es ist vorgesehen, dass im Falle einer Verletzung des Prüfkriteriums oder der Prüfkriterien von der Auswerteeinheit 24 eine Fehlerkompensation dergestalt vorgenommen werden kann, dass das Steuersignal 40 um einen Korrekturwert K verschoben wird, sodass sich ein verschobenes Steuersignal 40' ergibt. Dies ist in Fig. 8 veranschaulicht. Der Korrekturwert K wird in Abhängigkeit von der festgestellten Abweichung des fehlergründenden Prüfwerts von dem erwarteten Prüfwert ermittelt. Der erwartete Prüfwert kann z.B. ein zentraler Wert des Intervalls des zugeordneten Prüfkriteriums sein, der zu den Intervallgrenzen G1 und G2 im Wesentlichen gleich weit entfernt ist. Es ist möglich, dass das Steuersignal 40 für mehrere Periodenlängen T der zweiten Codespur 22 verschoben wird, wie dies in Fig. 8 angedeutet ist. Es ist jedoch auch möglich, dass abschnittsweise unterschiedliche Korrekturwerte herangezogen werden. Beispielsweise kann das Steuersignal 40 lokal gestreckt oder komprimiert werden, insbesondere im Bereich des fehlerbegründenden Prüfwerts. Dies entspricht einer Skalierung des Steuersignals 40 entlang seiner Erstreckungsrichtung und ist insbesondere dann von Vorteil, wenn z.B. der erste Teil 14 gegenüber der Drehachse D eine Exzentrität aufweist, die zu lokal unterschiedlichen Abweichungen der Prüfwerte von ihrem jeweiligen erwarteten Prüfwert führen. Zur Korrektur bzw. Kompensation dieser Fehler wird das Steuersignal 40 lokal in Abhängigkeit von den festgestellten Abweichungen skaliert. Somit kann die Vorrichtung 10 auch im Falle von mechanischen oder sonstigen Fehlern durch elektronische Korrektur wieder fehlerfrei betrieben werden. In diesem Fall kann eine Linearisierung der ermittelten Relativposition vorgesehen sein, um einen Genauigkeitsverlust zu vermeiden.

### Bezugszeichenliste

- 10: Vorrichtung
- 14: erstes Teil
- 16: Auslesevorrichtung
- 18: zweites Teil
- 20: erste Codespur
- 22: zweite Codespur
- 24: Auswerteeinheit
- 26: Bereich erster Art der zweiten Codespur
- 28: Bereich zweiter Art der zweiten Codespur
- 30, 30': Bereich erster Art der ersten Codespur
- 32, 32': Bereich zweiter Art der ersten Codespur
- 34, 34',: Auslesebereiche
- 36: Auslesebereich der ersten Gruppe
- 38: Auslesebereich der zweiten Gruppe
- 39, 39', 39": Gruppe von Auslesebereichen
- 40,40': Steuersignal
- 42: erstes Signal
- 44: zweites Signal
- 46: erster Auslesebereich der zweiten Gruppe
- 48: zweiter Auslesebereich der zweiten Gruppe
- 50: erster Auslesebereich der ersten Gruppe
- 52: zweiter Auslesebereich der ersten Gruppe
- 54, 56: Erfassungssignale von Auslesebereichen der ersten Gruppe
- 58, 60: Erfassungssignale von Auslesebereichen der zweiten Gruppe
- 62: Prüfsignal
- 64, 64': erster Prüfwert
- 66, 66': zweiter Prüfwert
- D: Drehachse
- K: Korrekturwert
- R: Drehrichtung
- T: Periodenlänge der zweiten Codespur

## Patentansprüche

1. Vorrichtung (10) zur Positions-, Längen-, oder Winkelbestimmung, mit
- einem ersten und einem zweiten Teil (14, 18), welche relativ zueinander bewegbar sind;
- einer an dem ersten Teil (14) angebrachten ersten Codespur (20) und einer an dem ersten Teil (14) angebrachten zweiten Codespur (22);
- einer an dem zweiten Teil (18) angebrachten Auslesevorrichtung (16) zur Erfassung der ersten und zweiten Codespur (20, 22); und
- einer Auswerteeinheit (24), welche dazu ausgebildet ist, anhand der von der Auslesevorrichtung (16) erfassten ersten und zweiten Codespur eine Relativposition zwischen dem ersten und dem zweiten Teil (14, 18) zu ermitteln und ferner dazu ausgebildet ist, zur Funktionsüberprüfung der Vorrichtung (10) wenigstens einen Prüfwert (64, 66) auf der Grundlage der erfassten ersten Codespur (20) und der erfassten zweiten Codespur (22) zu ermitteln,
**dadurch gekennzeichnet, dass** die erste Codespur (20) Bereiche erster Art (30) und Bereiche zweiter Art (32) umfasst, wobei die Bereiche erster und zweiter Art eine Codierung zur Positions-, Längen-, oder Winkelbestimmung schaffen,
wobei die Bereiche erster und zweiter Art jeweils eine Länge aufweisen, die gleich einem Vielfachen einer vordefinierten Maßeinheit (T/2) ist,
wobei die zweite Codespur (22) periodisch mit einer Periodenlänge (T) ausgebildet ist, die gleich einem Vielfachen der vordefinierten Maßeinheit (T/2) ist,
wobei die zweite Codespur (22) Bereiche erster Art (26) und Bereiche zweiter Art (28) umfasst, welche jeweils eine Länge aufweisen, die gleich der vordefinierten Maßeinheit (T/2) ist, und wobei die Bereiche erster und zweiter Art der zweiten Codespur (22) zu den Bereichen erster und zweiter Art der ersten Codespur einen Versatz (T/4) aufweisen,
wobei die Auswerteeinheit (24) dazu ausgebildet ist, auf der Grundlage der erfassten zweiten Codespur (22) ein Prüfsignal (62) zu erzeugen, welches stetig über die Periodenlänge der zweiten Codespur ist und abhängig von der Relativposition zwischen dem ersten und dem zweiten Teil ist, und wobei die Auswerteeinheit (24) ferner dazu ausgebildet ist, den Prüfwert (64, 66) auf der Grundlage des Prüfsignals (62) zu ermitteln,
wobei der Prüfwert (64, 66) auf einem Abtastwert des Prüfsignals (62) beruht, wobei die Auswerteeinheit (24) dazu ausgebildet ist, den Abtastwert in Abhängigkeit von der erfassten ersten Codespur (20) zu bestimmen, wobei die Auswerteeinheit (24) dazu ausgebildet ist, anhand der von der Auslesevorrichtung (16) erfassten ersten Codespur (20) einen Wechsel zwischen einem Bereich erster Art (30) der ersten Codespur (20) und einem Bereich zweiter Art (32) der ersten Codespur (20) zu detektieren, und wobei die Auswerteeinheit (24) ferner dazu ausgebildet ist, den Abtastwert durch Abtasten des Prüfsignals (62) bei einem, insbesondere jedem, detektierten Wechsel von einem Bereich erster Art (30) der ersten Codespur (20) zu einem Bereich zweiter Art (32) der ersten Codespur (20) und/oder umgekehrt zu bestimmen.

2. Vorrichtung nach Anspruch 1,
wobei der Prüfwert (64, 66) eine Phasenlage des Prüfsignals (62) relativ zu der erfassten ersten Codespur (54, 56, 58, 60) repräsentiert.

3. Vorrichtung nach zumindest einem der vorhergehenden Ansprüche,
wobei die Auswerteeinheit (24) dazu ausgebildet ist, den Prüfwert (64, 66) mit einem Prüfkriterium zu vergleichen und ein Fehlersignal zu erzeugen, wenn der Prüfwert das Prüfkriterium verletzt,
und/oder wobei die Vorrichtung (10) dazu ausgebildet ist, den Prüfwert (64, 66) an eine Datenverarbeitungseinrichtung auszugeben.

4. Vorrichtung nach zumindest einem der vorhergehenden Ansprüche, wobei die Auswerteeinheit (24) dazu ausgebildet ist, wenigstens einen Extremwert von mehreren Prüfwerten (64, 66) zu bestimmen und mit einem Prüfkriterium zu vergleichen sowie ein Fehlersignal zu erzeugen, wenn der Extremwert das Prüfkriterium verletzt,
und/oder wobei die Vorrichtung (10) dazu ausgebildet ist, den Extremwert an eine Datenverarbeitungseinrichtung auszugeben.

5. Vorrichtung nach Anspruch 3 oder 4,
wobei das Prüfkriterium einen Toleranzbereich aufweist, und wobei das Prüfkriterium als verletzt gilt, wenn der Prüfwert (64, 66) außerhalb des Toleranzbereichs liegt.

6. Vorrichtung nach zumindest einem der vorhergehenden Ansprüche, wobei die Auslesevorrichtung (16) mehrere separate Auslesebereiche (34) umfasst, wobei die Auslesebereiche (34) in eine erste Gruppe (36) und zumindest eine zweite Gruppe (38) unterteilt sind, und wobei die Auslesebereiche (34) zwischen der ersten und zweiten Gruppe alternierend angeordnet sind,
wobei der Prüfwert (64, 66) unter Verwendung zumindest einiger der Auslesebereiche (34) ermittelt wird.

7. Vorrichtung nach Anspruch 6,
wobei die mehreren Auslesebereiche (34) benachbarte Auslesebereiche (39) umfassen, die jeweils eine Länge aufweisen, die zumindest im Wesentlichen gleich einem Viertel (T/4) einer Periodenlänge der zweiten Codespur (22) ist und/oder wobei die mehreren Auslesebereiche (34) benachbarte Auslesebereiche (39) umfassen, die zueinander versetzt angeordnet sind, insbesondere um ein Viertel (T/4) einer Periodenlänge der zweiten Codespur (22),
wobei die Auswerteeinheit (24) dazu ausgebildet ist, ein Prüfsignal (62) zur Ermittlung des Prüfwerts (64, 66) unter Verwendung der benachbarten Auslesebereiche (39) zu erzeugen.

8. Vorrichtung nach Anspruch 6 oder 7,
wobei der wenigstens eine Prüfwert erste und zweite Prüfwerte umfasst, und wobei die ersten Prüfwerte (64) unter Verwendung der ersten Gruppe (36) von Auslesebereichen (34) und die zweiten Prüfwerte (66) unter Verwendung der zweiten Gruppe (38) von Auslesebereichen (34) ermittelt werden.

9. Vorrichtung nach zumindest einem der vorhergehenden Ansprüche,
wobei die Auswerteeinheit (24) dazu ausgebildet ist, die Ermittlung der Relativposition zwischen dem ersten und dem zweiten Teil (14, 18) in Abhängigkeit von dem Prüfwert (64, 66) anzupassen, um eine anhand des Prüfwerts festgestellte Fehlfunktion der Vorrichtung (10) zu beheben.

10. Verfahren zur Funktionsüberprüfung einer Vorrichtung (10) zur Positions-, Längen-, oder Winkelbestimmung, wobei die Vorrichtung insbesondere nach einem der vorhergehenden Ansprüche ausgebildet ist,
wobei das Verfahren zumindest folgende Schritte aufweist:
- Ermitteln eines Prüfwerts (64, 66) auf der Grundlage einer erfassten ersten Codespur (20) und einer erfassten zweiten Codespur (22) der Vorrichtung (10), wobei die erste Codespur (20) Bereiche erster Art (30) und Bereiche zweiter Art (32) umfasst, wobei die Bereiche erster und zweiter Art eine Codierung zur Positions-, Längen-, oder Winkelbestimmung schaffen, wobei die Bereiche erster und zweiter Art jeweils eine Länge aufweisen, die gleich einem Vielfachen einer vordefinierten Maßeinheit (T/2) ist, wobei die zweite Codespur (22) periodisch mit einer Periodenlänge (T) ausgebildet ist, die gleich einem Vielfachen der vordefinierten Maßeinheit (T/2) ist, wobei die zweite Codespur (22) Bereiche erster Art (26) und Bereiche zweiter Art (28) umfasst, welche jeweils eine Länge aufweisen, die gleich der vordefinierten Maßeinheit (T/2) ist, und wobei die Bereiche erster und zweiter Art der zweiten Codespur (22) zu den Bereichen erster und zweiter Art der ersten Codespur (20) einen Versatz (T/4) aufweisen;
- Vergleichen des Prüfwerts (64, 66) mit einem Prüfkriterium und Erzeugen eines Fehlersignals, wenn der Prüfwert (64, 66) das Prüfkriterium verletzt;
- Erzeugen eines Prüfsignals (62) auf der Grundlage der erfassten zweiten Codespur (22), welches stetig über die Periodenlänge der zweiten Codespur ist und abhängig von der Relativposition zwischen dem ersten und dem zweiten Teil ist, wobei das Ermitteln des Prüfwerts (64, 66) ferner auf der Grundlage des Prüfsignals (62) erfolgt, wobei der Prüfwert (64, 66) auf einem Abtastwert des Prüfsignals (62) beruht, der in Abhängigkeit von der erfassten ersten Codespur (20) bestimmt wird;
- Detektieren eines Wechsels zwischen einem Bereich erster Art (30) der ersten Codespur (20) und einem Bereich zweiter Art (32) der ersten Codespur (20) anhand der erfassten ersten Codespur (20); und
- Bestimmen des Abtastwerts durch Abtasten des Prüfsignals (62) bei einem, insbesondere jedem, detektierten Wechsel von einem Bereich erster Art (30) der ersten Codespur (20) zu einem Bereich zweiter Art (32) der ersten Codespur (20) und/oder umgekehrt.

## Claims

1. An apparatus (10) for position, length or angle determination, comprising
- a first and a second part (14, 18) which are movable relative to one another;
- a first code track (20) attached to the first part (14) and a second code track (22) attached to the first part (14);
- a readout apparatus (16) attached to the second part (18) for detecting the first and second code track (20, 22); and
- an evaluation unit (24) which is configured to determine a relative position between the first and the second part (14, 18) on the basis of the first and second code track detected by the readout apparatus (16) and which is further configured to determine at least one check value (64, 66) on the basis of the detected first code track (20) and the detected second code track (22) for a function check of the apparatus (10),
**characterized in that** the first code track (20) comprises regions (30) of a first kind and regions (32) of a second kind, wherein the regions of a first and second kind provide a coding for position, length or angle determination,
wherein the regions of a first and second kind each have a length which is equal to a multiple of a predefined measurement unit (T/2),
wherein the second code track (22) is periodically formed with a period length (T) which is equal to a multiple of the predefined measurement unit (T/2),
wherein the second code track (22) comprises regions (26) of a first kind and regions (28) of a second kind which each have a length which is equal to the predefined measurement unit (T/2), and wherein the regions of a first and second kind of the second code track (22) have an offset (T/4) from the regions of a first and second kind of the first code track,
wherein the evaluation unit (24) is configured to generate a check signal (62) on the basis of the detected second code track (22), said check signal (62) being constant over the period length of the second code track and being dependent on the relative position between the first and the second part, and wherein the evaluation unit (24) is further configured to determine the check value (64, 66) on the basis of the check signal (62), wherein the check value (64, 66) is based on a sampled value of the check signal (62), wherein the evaluation unit (24) is configured to determine the sampled value in dependence on the detected first code track (20), wherein the evaluation unit (24) is configured to detect a change between a region (30) of a first kind of the first code track (20) and a region (32) of a second kind of the first code track (20) on the basis of the first code track (20) detected by the readout apparatus (16),
and wherein the evaluation unit (24) is further configured to determine the sampled value by sampling the check signal (62) on a detected change, in particular on each detected change, from a region (30) of a first kind of the first code track (20) to a region (32) of a second kind of the first code track (20) and/or vice versa.

2. An apparatus in accordance with claim 1,
wherein the check value (64, 66) represents a phase position of the check signal (62) relative to the detected first code track (54, 56, 58, 60).

3. An apparatus in accordance with at least one of the preceding claims,
wherein the evaluation unit (24) is configured to compare the check value (64, 66) with a check criterion and to generate an error signal if the check value violates the check criterion,
and/or wherein the apparatus (10) is configured to output the check value (64, 66) to a data processing device.

4. An apparatus in accordance with at least one of the preceding claims,
wherein the evaluation unit (24) is configured to determine at least one extreme value of a plurality of check values (64, 66) and to compare it with a check criterion and to generate an error signal if the extreme value violates the check criterion,
and/or wherein the apparatus (10) is configured to output the extreme value to a data processing device.

5. An apparatus in accordance with claim 3 or claim 4,
wherein the check criterion has a tolerance range, and wherein the check criterion is considered to be violated if the check value (64, 66) is outside the tolerance range.

6. An apparatus in accordance with at least one of the preceding claims,
wherein the readout apparatus (16) comprises a plurality of separate readout regions (34), wherein the readout regions (34) are divided into a first group (36) and at least a second group (38), and wherein the readout regions (34) are arranged in an alternating manner between the first and second group,
wherein the check value (64, 66) is determined using at least some of the readout regions (34).

7. An apparatus in accordance with claim 6,
wherein the plurality of readout regions (34) comprise adjacent readout regions (39) which each have a length which is at least substantially equal to a quarter (T/4) of a period length of the second code track (22), and/or wherein the plurality of readout regions (34) comprise adjacent readout regions (39) which are arranged offset from one another, in particular by a quarter (T/4) of a period length of the second code track (22),
wherein the evaluation unit (24) is configured to generate a check signal (62) for determining the check value (64, 66) using the adjacent readout regions (39).

8. An apparatus in accordance with claim 6 or claim 7,
wherein the at least one check value comprises first and second check values, and wherein the first check values (64) are determined using the first group (36) of readout regions (34) and the second check values (66) are determined using the second group (38) of readout regions (34).

9. An apparatus in accordance with at least one of the preceding claims,
wherein the evaluation unit (24) is configured to adapt the determination of the relative position between the first and the second part (14, 18) in dependence on the check value (64, 66) in order to eliminate a malfunction of the apparatus (10) determined on the basis of the check value.

10. A method for a function check of an apparatus (10) for position, length or angle determination, wherein the apparatus is in particular configured in accordance with any one of the preceding claims,
wherein the method at least comprises the following steps:
- determining a check value (64, 66) on the basis of a detected first code track (20) and a detected second code track (22) of the apparatus (10), wherein the first code track (20) comprises regions (30) of a first kind and regions (32) of a second kind, wherein the regions of a first and second kind provide a coding for position, length or angle determination, wherein the regions of a first and second kind each have a length which is equal to a multiple of a predefined measurement unit (T/2), wherein the second code track (22) is periodically formed with a period length (T) which is equal to a multiple of the predefined measurement unit (T/2), wherein the second code track (22) comprises regions (26) of a first kind and regions (28) of a second kind which each have a length which is equal to the predefined measurement unit (T/2), and wherein the regions of a first and second kind of the second code track (22) have an offset (T/4) from the regions of a first and second kind of the first code track (20);
- comparing the check value (64, 66) with a check criterion and generating an error signal if the check value (64, 66) violates the check criterion;
- generating a check signal (62) on the basis of the detected second code track (22), said check signal (62) being constant over the period length of the second code track and being dependent on the relative position between the first and the second part, wherein the determination of the check value (64, 66) further takes place on the basis of the check signal (62), wherein the check value (64, 66) is based on a sampled value of the check signal (62) which is determined in dependence on the detected first code track (20);
- detecting a change between a region (30) of a first kind of the first code track (20) and a region (32) of a second kind of the first code track (20) on the basis of the detected first code track (20); and
- determining the sampled value by sampling the check signal (62) on a detected change, in particular on each detected change, from a region (30) of a first kind of the first code track (20) to a region (32) of a second kind of the first code track (20) and/or vice versa.

## Revendications

1. Dispositif (10) de détermination de position, de longueur ou d'angle, comprenant :
- une première et une deuxième partie (14, 18) qui sont mobiles l'une par rapport à l'autre ;
- une première piste de codage (20) appliquée sur la première partie (14) et une deuxième piste de codage (22) appliquée sur la première partie (14) ;
- un dispositif de lecture (16) appliqué sur la deuxième partie (18) pour détecter la première et la deuxième piste de codage (20, 22) ; et
- une unité d'évaluation (24) qui est conçue pour déterminer, à l'aide de la première et de la deuxième piste de codage détectées par le dispositif de lecture (16), une position relative entre la première et la deuxième partie (14, 18) et qui est en outre conçue pour déterminer, pour vérifier le fonctionnement du dispositif (10), au moins une valeur de contrôle (64, 66) sur la base de la première piste de codage (20) détectée et de la deuxième piste de codage (22) détectée,
**caractérisé en ce que** la première piste de codage (20) comprend des zones d'un premier type (30) et des zones d'un deuxième type (32), les zones du premier et du deuxième type formant un codage pour la détermination de position, de longueur ou d'angle,
les zones du premier et du deuxième type présentant chacune une longueur qui est égale à un multiple d'une unité de mesure prédéfinie (T/2),
la deuxième piste de codage (22) étant formée de manière périodique avec une longueur de période (T) qui est égale à un multiple de l'unité de mesure prédéfinie (T/2),
la deuxième piste de codage (22) comprenant des zones d'un premier type (26) et des zones d'un deuxième type (28) qui présentent chacune une longueur qui est égale à l'unité de mesure prédéfinie (T/2), et les zones du premier et du deuxième type de la deuxième piste de codage (22) présentant un décalage (T/4) par rapport aux zones du premier et du deuxième type de la première piste de codage,
l'unité d'évaluation (24) étant conçue pour générer, sur la base de la deuxième piste de codage (22) détectée, un signal de contrôle (62) qui est continu sur la longueur de période de la deuxième piste de codage et qui dépend de la position relative entre la première et la deuxième partie, et l'unité d'évaluation (24) étant en outre conçue pour déterminer la valeur de contrôle (64, 66) sur la base du signal de contrôle (62),
la valeur de contrôle (64, 66) étant basée sur une valeur d'échantillonnage du signal de contrôle (62), l'unité d'évaluation (24) étant conçue pour déterminer la valeur d'échantillonnage en fonction de la première piste de codage (20) détectée,
l'unité d'évaluation (24) étant conçue pour détecter, à l'aide de la première piste de codage (20) détectée par le dispositif de lecture (16), un passage d'une zone du premier type (30) de la première piste de codage (20) à une zone du deuxième type (32) de la première piste de codage (20),
et l'unité d'évaluation (24) étant en outre conçue pour déterminer la valeur d'échantillonnage en échantillonnant le signal de contrôle (62) lors d'un passage détecté, en particulier de chaque passage détecté, d'une zone du premier type (30) de la première piste de codage (20) à une zone du deuxième type (32) de la première piste de codage (20) et/ou inversement.

2. Dispositif selon la revendication 1,
dans lequel la valeur de contrôle (64, 66) représente une position de phase du signal de contrôle (62) par rapport à la première piste de codage (54, 56, 58, 60) détectée.

3. Dispositif selon au moins l'une des revendications précédentes,
dans lequel l'unité d'évaluation (24) est conçue pour comparer la valeur de contrôle (64, 66) à un critère de contrôle et pour générer un signal d'erreur lorsque la valeur de contrôle viole le critère de contrôle,
et/ou dans lequel le dispositif (10) est conçu pour délivrer la valeur de contrôle (64, 66) à un moyen de traitement de données.

4. Dispositif selon au moins l'une des revendications précédentes,
dans lequel l'unité d'évaluation (24) est conçue pour déterminer au moins une valeur extrême de plusieurs valeurs de contrôle (64, 66) et pour la comparer à un critère de contrôle ainsi que pour générer un signal d'erreur lorsque la valeur extrême viole le critère de contrôle,
et/ou dans lequel le dispositif (10) est configuré pour délivrer la valeur extrême à un moyen de traitement de données.

5. Dispositif selon la revendication 3 ou 4,
dans lequel le critère de contrôle présente une plage de tolérance, et dans lequel le critère de contrôle est considéré comme violé lorsque la valeur de contrôle (64, 66) se situe en dehors de la plage de tolérance.

6. Dispositif selon au moins l'une des revendications précédentes,
dans lequel le dispositif de lecture (16) comprend plusieurs zones de lecture (34) distinctes, les zones de lecture (34) étant divisées en un premier groupe (36) et au moins un deuxième groupe (38), et les zones de lecture (34) étant disposées en alternance entre le premier et le deuxième groupe,
dans lequel la valeur de contrôle (64, 66) est déterminée en utilisant au moins certaines des zones de lecture (34).

7. Dispositif selon la revendication 6,
dans lequel lesdites plusieurs zones de lecture (34) comprennent des zones de lecture adjacentes (39) qui présentent chacune une longueur qui est au moins sensiblement égale à un quart (T/4) d'une longueur de période de la deuxième piste de codage (22) et/ou dans lequel lesdites plusieurs zones de lecture (34) comprennent des zones de lecture adjacentes (39) qui sont décalées les unes par rapport aux autres, en particulier d'un quart (T/4) d'une longueur de période de la deuxième piste de codage (22),
dans lequel l'unité d'évaluation (24) est conçue pour générer un signal de contrôle (62) pour déterminer la valeur de contrôle (64, 66) en utilisant les zones de lecture adjacentes (39).

8. Dispositif selon la revendication 6 ou 7,
dans lequel ladite au moins une valeur de contrôle comprend des premières et deuxièmes valeurs de contrôle,
et dans lequel les premières valeurs de contrôle (64) sont déterminées en utilisant le premier groupe (36) de zones de lecture (34) et les deuxièmes valeurs de contrôle (66) sont déterminées en utilisant le deuxième groupe (38) de zones de lecture (34).

9. Dispositif selon au moins l'une des revendications précédentes,
dans lequel l'unité d'évaluation (24) est conçue pour adapter la détermination de la position relative entre la première et la deuxième partie (14, 18) en fonction de la valeur de contrôle (64, 66) afin de remédier à un dysfonctionnement du dispositif (10) constaté à l'aide de la valeur de contrôle.

10. Procédé de vérification de fonctionnement d'un dispositif (10) de détermination de position, de longueur ou d'angle, le dispositif étant en particulier réalisé selon l'une des revendications précédentes,
le procédé présentant au moins les étapes consistant à :
- déterminer une valeur de contrôle (64, 66) sur la base d'une première piste de codage (20) détectée et d'une deuxième piste de codage (22) détectée du dispositif (10), la première piste de codage (20) comprenant des zones d'un premier type (30) et des zones d'un deuxième type (32), les zones du premier et du deuxième type fournissant un codage pour la détermination de position, de longueur ou d'angle, les zones du premier et du deuxième type présentant chacune une longueur qui est égale à un multiple d'une unité de mesure prédéfinie (T/2), la deuxième piste de codage (22) étant formée de manière périodique avec une longueur de période (T) qui est égale à un multiple de l'unité de mesure prédéfinie (T/2), la deuxième piste de codage (22) comprenant des zones d'un premier type (26) et des zones d'un deuxième type (28) qui présentent chacune une longueur qui est égale à l'unité de mesure prédéfinie (T/2), et les zones du premier et du deuxième type de la deuxième piste de codage (22) présentant un décalage (T/4) par rapport aux zones du premier et du deuxième type de la première piste de codage (20) ;
- comparer la valeur de contrôle (64, 66) à un critère de contrôle et générer un signal d'erreur si la valeur de contrôle (64, 66) viole le critère de contrôle ;
- générer, sur la base de la deuxième piste de codage (22) détectée, un signal de contrôle (62) qui est continu sur la longueur de période de la deuxième piste de codage et qui dépend de la position relative entre la première et la deuxième partie, la détermination de la valeur de contrôle (64, 66) étant en outre effectuée sur la base du signal de contrôle (62), la valeur de contrôle (64, 66) étant basée sur une valeur d'échantillonnage du signal de contrôle (62) qui est déterminée en fonction de la première piste de codage (20) détectée ;
- détecter un passage d'une zone du premier type (30) de la première piste de codage (20) à une zone du deuxième type (32) de la première piste de codage (20) à l'aide de la première piste de codage (20) détectée ; et
- déterminer la valeur d'échantillonnage en échantillonnant le signal de contrôle (62) lors d'un passage détecté, en particulier de chaque changement détecté, d'une zone du premier type (30) de la première piste de codage (20) à une zone du deuxième type (32) de la première piste de codage (20) et/ou inversement.
